(19) Europäisches Patentamt
European Patent Office
Office européen des brevets

(11) **EP 4 055 111 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **20800899.5**

(22) Anmeldetag: **03.11.2020**

(51) Internationale Patentklassifikation (IPC):
**C09J 153/02** (2006.01) **C09J 7/38** (2018.01)

(52) Gemeinsame Patentklassifikation (CPC):
(C-Sets verfügbar)
**C09J 7/10; C09J 153/02;** C08L 2203/14;
C08L 2203/206; C08L 2205/20; C09J 2301/308;
C09J 2301/412; C09J 2400/24; C09J 2453/00

(Forts.)

(86) Internationale Anmeldenummer:
**PCT/EP2020/080794**

(87) Internationale Veröffentlichungsnummer:
**WO 2021/089532 (14.05.2021 Gazette 2021/19)**

(54) **HAFTKLEBEMASSEN, DIESE ENTHALTENDE SELBSTKLEBEPRODUKTE UND VERBUNDE**

PRESSURE-SENSITIVE ADHESIVE COMPOUNDS, AND SELF-ADHESIVE PRODUCTS AND COMPOSITES COMPRISING THE LATTER

COMPOSÉS ADHÉSIFS SENSIBLES À LA PRESSION, ET PRODUITS AUTO-ADHÉSIFS ET COMPOSITES COMPRENANT CES DERNIERS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2019 DE 102019216942**

(43) Veröffentlichungstag der Anmeldung:
**14.09.2022 Patentblatt 2022/37**

(73) Patentinhaber: **tesa SE
22848 Norderstedt (DE)**

(72) Erfinder:
• **DOLLASE, Thilo
22397 Hamburg (DE)**
• **EGGER, Michael
22297 Hamburg (DE)**
• **ESCUDERO VALLEJO, Aranzazu
22455 Hamburg (DE)**
• **GARGIULO, Jessika
20255 Hamburg (DE)**

(74) Vertreter: **tesa SE
Hugo-Kirchberg-Straße 1
22848 Norderstedt (DE)**

(56) Entgegenhaltungen:
**EP-A1- 3 330 335**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C09J 153/02, C08L 53/02, C08L 91/00**

**Beschreibung**

Die Erfindung betrifft geschäumte Haftklebemasseschichten, diese enthaltende Selbstklebeprodukte wie insbesondere Klebebänder, und die Verwendung doppelseitig klebender Varianten der Klebebänder in einem Verbund mit zwei Substraten wie Bauteilen von Mobilgeräten.

Synthesekautschuk basierende Haftklebemassen, die Styrol-Blockcopolymere enthalten, sind hinlänglich bekannt und finden in vielfältigen Anwendungen Einsatz. Vorteile dieser Art von Haftklebemassen sind die hohe Verklebungsfestigkeit auf Untergründen unterschiedlicher Oberflächenenergie und vor allem auch auf Untergründen geringer Oberflächenenergie. Sie bestechen gleichzeitig durch sehr hohe Halteleistungen unter üblichen Umgebungsbedingungen.

Moderne Anwendungen im Bereich der Verklebung von Bauteilen in Mobilgeräten, die durch Selbstklebeprodukte erzeugt werden können, verlangen neben einer Kombination aus hoher Verklebungsfestigkeit und Halteleistung auch eine hohe Wärmescherfestigkeit und insbesondere Schockbeständigkeit. Hier ist für typische Synthesekautschuk basierende Formulierungen stets weitere Leistungsverbesserung gewünscht, obwohl sie bereits attraktive Leistungsfähigkeit bieten können. Hohe Verklebungsfestigkeiten werden üblicherweise erreicht, indem einem Synthesekautschuk ein relativ hoher Anteil an Klebharz(en) zugegeben wird.

Unter den Begriff "Mobilgeräte" fallen zum Beispiel Geräte der Consumer-ElektronikIndustrie, zu denen elektronische, optische und feinmechanische Geräte zählen, im Sinne dieser Anmeldung insbesondere solche Geräte, wie sie in Klasse 9 der Internationalen Klassifikation von Waren und Dienstleistungen für die Eintragung von Marken (Klassifikation von Nizza), 10. Ausgabe (NCL(10-2013)), einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge-, Mess-, Signal-, Kontroll-, Rettungs- und Unterrichtsapparate und - instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte wie beispielsweise Fernseher und dergleichen
- Akustische Aufzeichnungs-, Verarbeitungs-, -übertragungs- und -wiedergabegeräte wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion wie beispielweise Telefone, Anrufbeantworter
- Chemische und physikalische Messgeräte, Steuergeräte und Instrumente wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärker Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden.

Für diese Geräte sind insbesondere Klebebänder gefordert, die eine hohe Halteleistung besitzen. Zum Teil besteht zusätzlich der Wunsch nach späterer Entfernbarkeit. In vielen Anwendungen wird zudem eine hohe Festigkeit auch bei erhöhten Temperaturen gefordert.

Des Weiteren ist aber insbesondere wichtig, dass die Klebebänder in ihrer Halteleistung nicht versagen, wenn das Mobilgerät, zum Beispiel ein Handy, fallengelassen wird und auf den Untergrund aufprallt. Der Klebestreifen beziehungsweise der Verklebungsverbund muss also eine sehr hohe Schockresistenz aufweisen.

Haftklebemassen basierend auf Styrol-Blockcopolymeren, einer speziellen Art der Polyvinylaromat-Polydien-Blockcopolymeren, zählen zu den klassischen Klebemassefamilien, die in Selbstklebeprodukten zur Anwendung kommen. Eine Reihe technologischer Aspekte solche Haftklebemassen betreffend sind zum Beispiel bei D. Satas beschrieben. Um Polydienen einen haftklebrigen Charakter zu verleihen, müssen sie mit Klebharzen versetzt werden. Dies gilt auch für Polyvinylaromaten-Blockcopolymere, die Polydien-Blöcke enthalten. D. Satas schlägt eine Reihe gängiger Klebharze, die zu diesem Zweck eingesetzt werden können, vor und gibt Leitlinien für die Auswahl geeigneter Klebharze für verschiedene Klassen an Vinylaromaten-Blockcopolymeren (F. C. Jagisch, J. M. Tancrede in Handbook of Pressure Sensitive Adhesive Technology, D. Satas (Hrsg.), 3. Aufl., 1999, Satas & Associates, Warwick, Rhode Island, Kapitel 16).

Haftklebemassen basierend auf Vinylaromaten-Blockcopolymeren, die vorteilhafte Schockresistenz aufweisen, sind ebenfalls beschrieben. DE 10 2016 202 018 lehrt, dass durch speziellen Anteil an Blockcopolymeren in der Formulierung (mindestens 52 %) und über die Auswahl geeigneter Blockcopolymere (Diblock-Anteil mindestens 50 %) verbesserte Schockresistenz erreicht werden kann. In Beispielformulierungen mit geringerem Diblock-Anteil zeigt sich Schockresistenz auf deutlich niedrigerem Niveau.

Desweiteren ist es möglich, Schockresistenz zu verbessern, wenn die Haftklebemasse geschäumt vorliegt und zu diesem Zweck zum Beispiel expandierte Mikroballons enthält. EP 3 075 775 A1, DE 10 2008 056 980, DE 10 2008 004 388 A1 und DE 10 2008 038 471 A1 beschreiben mit Mikroballons versehene Blockcopolymer-Abmischungen mit Klebharzen.

EP 3 075 775 A1 beschreibt Zusammensetzungen auf Basis von Polyvinylaromaten-Blockcopolymeren und Klebharzen bestimmter Polarität. Es werden keine speziellen Architekturen / Zusammensetzungen der Polyvinylaromaten-Blockcopolymere als besonders geeignet herausgestellt. So wird im Hinblick auf den Diblock-Anteil und im Hinblick auf den Molmassenbereich kein bestimmter als besonders vorteilhaft im Zusammenhang mit Schockresistenz beschrieben. In den Beispielen wird als Polyvinylaromaten-Blockcopolymer ein Triblockcopolymer mit einem Diblock-Anteil von 17 Gew.-% und einem Peakmolekulargewicht des Triblocks von 100 000 g/mol genutzt.

DE 10 2008 056 980 A1 beschreibt Zusammensetzungen auf Basis von Polyvinylaromaten-Blockcopolymeren mit einem hohen Vinyl-Anteil (> 30 Gew.-%) im Polydien-Teil. Darüber hinaus werden keine speziellen Architekturen / Zusammensetzungen der Polyvinylaromaten-Blockcopolymere als besonders geeignet im Zusammenhang mit Schockresistenz herausgestellt. So wird im Hinblick auf den Diblock-Anteil und im Hinblick auf den Molmassenbereich kein bestimmter als besonders vorteilhaft beschrieben. In den Beispielen wird als Polyvinylaromaten-Blockcopolymer ein radiales Blockcopolymer mit einem gewichtsmittleren Molekulargewicht von 71 000 g/mol genutzt. Der hohe Vinyl-Anteil führt zu einer Erhöhung der Glasübergangstemperatur des Polydien-Blocks im Vergleich zu solchen Polydien-Blöcken mit hauptsächlich 1,4-Verknüpfungsmuster. Dies kann sich u. a. in der Kaltschlagfestigkeit negativ auswirken.

DE 10 2008 004 388 A1 beschreibt Zusammensetzungen u. a. auf Basis von Polyvinylaromaten-Blockcopolymeren. Es werden keine speziellen Architekturen / Zusammensetzungen der Polyvinylaromaten-Blockcopolymere als besonders geeignet herausgestellt. So wird im Hinblick auf den Diblock-Anteil und im Hinblick auf den Molmassenbereich kein bestimmter als besonders vorteilhaft im Zusammenhang mit Schockresistenz beschrieben. In den Beispielen werden Zusammensetzungen mit sehr geringer Dichte beschrieben.

DE 10 2008 038 471 A1 beschreibt Zusammensetzungen auf Basis von Polyvinylaromaten-Blockcopolymeren. Es werden keine speziellen Architekturen / Zusammensetzungen der Polyvinylaromaten-Blockcopolymere als besonders geeignet herausgestellt. So wird im Hinblick auf den Diblock-Anteil und im Hinblick auf den Molmassenbereich kein bestimmter als besonders vorteilhaft im Zusammenhang mit Schockresistenz beschrieben. In den Beispielen wird eine Haftklebemasseschicht mit sehr hohem Mikroballon-Anteil und sehr niedriger Dichte beschrieben.

Die EP 3330335 offenbart einen Haftklebestreifen, der sich durch dehnendes Verstrecken im Wesentlichen in der Verklebungsebene rückstands- und zerstörungsfrei wieder ablösen lässt, enthaltend zumindest eine Klebemassenschicht, die mit Mikroballons geschäumt ist, und zumindest einen Träger B, wobei sowohl die Klebemassenschicht, als auch der Träger B Polyvinylaromaten-Polydien-Blockcopolymere mit bestimmten Eigenschaften enthalten.

Es besteht nach wie vor die stetige Aufgabe, weiter verbesserte Lösungen, insbesondere zur Verwendung in doppelseitigen Selbstklebeprodukten, zu schaffen für geschäumte Haftklebemasseschichten, die bei hoher Verklebungsfestigkeit (Klebkraft) eine hohe Wärmescherfestigkeit aufweisen und vor allem eine verbesserte Schockresistenz (Schockwiderstand, Durchschlagzähigkeit). Solche Haftklebemasseschichten wären besonders geeignet für Selbstklebeprodukte, über die Verklebungsverbünde insbesondere in Mobilgeräten mit hoher Schockresistenz realisiert werden könnten.

Demgemäß betrifft die Erfindung eine geschäumte Haftklebemasseschicht auf Basis von Polyvinylaromat-Polydien-Blockcopolymeren, insbesondere für doppelseitige Selbstklebebänder, enthaltend

    a) 39,8 Gew.-% bis 51,8 Gew.-% einer Elastomerkomponente,
    b) 35,0 Gew.-% bis 58,0 Gew.-% einer Klebharzkomponente,

c) 2,0 Gew.-% bis 15,0 Gew.-% einer Weichmacherkomponente,

d) 0,0 Gew.-% bis 18,0 Gew.-% weitere Additive und

e) Mikroballons, vorzugsweise in einer Menge von 0,2 Gew.-% bis 2,5 Gew.-%, wobei die Mikroballons zumindest teilweise expandiert sind,

wobei die Elastomerkomponente (a) zu mindestens 90 Gew.-% aus ein oder mehreren Polyvinylaromat-Polydien-Blockcopolymeren besteht,

wobei der mittlere Diblock-Anteil, bezogen auf die gesamten Polyvinylaromat-Polydien-Blockcopolymere, höchstens 35 Gew.-% beträgt,

wobei die Polydienblöcke der Polyvinylaromat-Polydien-Blockcopolymere einen mittleren Vinyl-Anteil (Test IX) von weniger als 20 Gew.-%, bezogen auf die gesamten Polydienblöcke, aufweisen,

und wobei, bezogen auf die gesamten Polyvinylaromaten-Polydien-Blockcopolymere, zumindest ein Polyvinylaromat-Polydien-Blockcopolymer einer Peakmolmasse (Test Ia) von mindestens 125 000 g/mol zu mindestens 15 Gew.-%, bevorzugt mindestens 25 Gew.-%, und bis zu 100 Gew.-%, bevorzugt höchstens 90 Gew.-%, enthalten ist,

wobei die Klebharzkomponente (b) zu mindestens 75 Gew.-% bezogen auf die Klebharzkomponente zumindest ein Klebharz mit einem DACP (Test II) von mindestens - 20 °C und einer Erweichungstemperatur von mindestens 85 °C und höchstens 140 °C (Test IIIa) enthält,

wobei die Weichmacherkomponente (c) zumindest ein Weichharz und/oder Mineralöl mit einer Erweichungstemperatur (Ring & Ball, Test VI) von < 30 °C enthält,

wobei die Summe aus Klebharzkomponente (b) und Weichmacherkomponente (c) mindestens 48 Gew.-% und höchstens 60 Gew.-% beträgt und das harmonische Mittel der Erweichungstemperatur (Test IIIb) von Klebharzkomponente und Weichmacherkomponente bei mindestens 95 °C und höchstens 125 °C liegt und

wobei die Dichte, d.h. absolute Dichte (Test XI), der geschäumten Haftklebemasseschicht bei mindestens 600 kg/m$^3$ und höchstens 950 kg/m$^3$ liegt.

Bevorzugte Ausführungsformen der geschäumten Haftklebemasseschicht befinden sich in den Unteransprüchen.

Die weiteren Ansprüche beziehen sich auf insbesondere doppelseitige Klebebänder enthaltend zumindest eine erfindungsgemäße Haftklebemasseschicht, auf Verbunde, bei denen zwei Substrate mittels eines solchen Klebebands verklebt sind, und auf die Verwendung eines solchen Klebebands zur Verklebung von Bauteilen von Mobilgeräten, wie zum Beispiel Akkus.

Erfindungsgemäß kann es sich bei einer Komponente um eine einzelne chemische Verbindung bzw. ein einzelnes Material handeln oder aber um eine Mischung aus mehreren chemischen Verbindungen bzw. Materialien.

Eine Haftklebemasse ist eine Klebemasse, die bereits unter relativ schwachem Andruck eine dauerhafte Verbindung mit fast allen Haftgründen erlaubt und ggf. nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Besonders attraktiv sind erfindungsgemäße Haftklebemasseschichten, wenn sie aus dem folgenden Anforderungskatalog die gelisteten Kriterien zur Verklebungsfestigkeit und Schockresistenz (Schockwiderstand) erfüllen. Vorzugsweise erfüllen erfindungsgemäße Klebemasseschichten alle drei Kriterien des folgenden Anforderungskatalogs (Tabelle 1):

Tabelle 1: Anforderungskatalog.

| Anforderung | Eigenschaft | Leistungsvermögen | Prüfmethode |
|---|---|---|---|
| Verklebungsfestigkeit | Klebkraft (Stahl) | ≥ 3,0 N/cm, bevorzugt ≥ 6,0 N/cm, sehr bevorzugt ≥ 9,0 N/cm | Test V |

(fortgesetzt)

| Anforderung | Eigenschaft | Leistungsvermögen | Prüfmethode |
|---|---|---|---|
| Wärmescherfestigkeit | SAFT | $\geq$ 115 °C, bevorzugt $\geq$ 125 °C, sehr bevorzugt $\geq$ 135 °C | Test VI |
| Schockwiderstand | DuPont z (PC/PC) | $\geq$ 600 mJ, bevorzugt $\geq$ 650 mJ, sehr bevorzugt $\geq$ 700 mJ | Test VII |

*Elastomerkomponente (a)*

Die Elastomerkomponente (a) besteht zu mindestens 90 Gew.-%, vorzugsweise im Wesentlichen, aus ein oder mehreren Polyvinylaromat-Polydien-Blockcopolymeren, wobei das Polydien typischerweise aus konjugiertem Dien wie insbesondere 1,3-Dien hergestellt ist. Dabei beträgt der mittlere Diblock-Anteil, bezogen auf die gesamten Polyvinylaromat-Polydien-Blockcopolymere, höchstens 35 Gew.-%, wobei die Polydienblöcke der Polyvinylaromat-Polydien-Blockcopolymere einen mittleren Vinyl-Anteil (Test IX) von weniger als 20 Gew.-%, bezogen auf die gesamten Polydienblöcke, aufweisen, und wobei, bezogen auf die gesamten Polyvinylaromaten-Polydien-Blockcopolymere, zumindest ein Polyvinylaromat-Polydien-Blockcopolymer einer Peakmolmasse (Test Ia) von mindestens 125 000 g/mol zu mindestens 15 Gew.-%, bevorzugt mindestens 25 Gew.-%, und bis zu 100 Gew.-%, bevorzugt höchstens 90 Gew.-%, enthalten ist.

Vorzugsweise beträgt der mittlere Diblock-Anteil, bezogen auf die gesamten Polyvinylaromat-Polydien-Blockcopolymere, höchstens 25 Gew.-%, besonders bevorzugt höchstens 15 Gew.-%.

Ebenso weisen vorzugsweise die Polydienblöcke der Polyvinylaromat-Polydien-Blockcopolymere einen mittleren Vinyl-Anteil (Test IX) von weniger als 17 Gew.-%, bevorzugt weniger als 13 Gew.-%, bezogen auf die gesamten Polydienblöcke auf.

Ebenso vorzugsweise ist, bezogen auf die gesamten Polyvinylaromaten-Polydien-Blockcopolymere, zumindest ein Polyvinylaromat-Polydien-Blockcopolymer einer Peakmolmasse (Test Ia) von mindestens 200 000 g/mol, sehr bevorzugt mindestens 250 000 g/mol, zu mindestens 15 Gew.-%, bevorzugt mindestens 25 Gew.-%, und bis zu 100 Gew.-%, bevorzugt höchstens 90 Gew.-%, enthalten.

Die Elastomerkomponente enthält typischerweise mindestens einen Synthesekautschuk in Form eines Blockcopolymers mit einem Aufbau A-B-A, $(A-B)_n$, $(A-B)_nX$ oder $(A-B-A)_nX$, worin

- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen;
- X für den Rest eines Kopplungsreagenzes oder multifunktionellen Initiators und
- n für eine ganze Zahl $\geq$ 2 stehen.

Es können alle Synthesekautschuke der erfindungsgemäßen Haftklebemasseschicht Blockcopolymere mit einem Aufbau wie vorstehend dargelegt sein. Die erfindungsgemäße Haftklebemasseschicht kann somit auch Gemische verschiedener Blockcopolymere mit einem Aufbau wie vorstehend enthalten.

Das zumindest eine geeignete Blockcopolymer umfasst also typischerweise einen oder mehrere gummiartige Blöcke B (Elastomerblöcke, Weichblöcke) und mindestens zwei glasartige Blöcke A (Hartblöcke). Besonders bevorzugt ist mindestens ein Synthesekautschuk der erfindungsgemäßen Haftklebemasseschicht ein Blockcopolymer mit einem Aufbau A-B-A, $(A-B)_2X$, $(A-B)_3X$ oder $(A-B)_4X$, wobei für A, B und X die vorstehenden Bedeutungen gelten. Es können alle Synthesekautschuke der erfindungsgemäßen Haftklebemasseschicht Blockcopolymere einem Aufbau A-B-A, $(AB)_2X$, $(A-B)_3X$ oder $(A-B)_4X$ entsprechen, wobei für A, B und X die vorstehenden Bedeutungen gelten. Zumindest ein Triblockcopolymer oder höheres Multiblockcopolymer (linear oder mehrarmig, radial, sternförmig) weist eine Peakmolmasse von mindestens 125 000 g/mol auf.

Die Elastomerkomponente kann in eingeschränkter Menge zudem ein oder mehrere Diblockcopolymere A-B enthalten. Es hat sich jedoch überraschenderweise gezeigt, dass Diblockcopolymere im Gegensatz zu ungeschäumten Formulierungen (DE 10 2016 202 018) in geschäumten Formulierungen keinen ausgeprägt positiven oder sogar negativen Einfluss auf die Schockbeständigkeit haben. Ihr Anteil in der geschäumten Haftklebemasseschicht sollte daher nicht zu hoch sein und bei höchstens 35 Gew.-% bezogen auf alle Polyvinylaromat-Polydien-Blockcopolymere liegen.

Insbesondere ist der Synthesekautschuk der erfindungsgemäßen Haftklebemasseschicht ein Gemisch aus Blockcopolymeren mit einem Aufbau A-B, A-B-A, $(A-B)_3X$ oder $(A-B)_4X$, das bevorzugt ein radiales Blockcopolymer und/oder Triblockcopolymere A-B-A enthält. Weiterhin vorteilhaft ist ein Gemisch aus Triblockcopolymeren und $(A-B)_n$- oder $(A-B)_nX$-Blockcopolymeren mit n größer gleich 3.

Als Haftklebemasseschichten finden typischerweise solche auf Basis von Blockcopolymeren enthaltend Polymerblöcke überwiegend gebildet von Vinylaromaten (A-Blöcke), bevorzugt Styrol, und solche überwiegend gebildet durch Polymerisation von 1,3-Dienen (B-Blöcke) wie zum Beispiel Butadien und Isopren oder einem Copolymer aus diesen Anwendung.

Vorzugsweise besitzen die Blockcopolymere der Haftklebemasseschichten Polystyrolendblöcke.

Die aus den A- und B-Blöcken resultierenden Blockcopolymere können gleiche oder unterschiedliche B-Blöcke enthalten. Die Blockcopolymere können also lineare A-B-A-Strukturen aufweisen. Einsetzbar sind entsprechend ebenfalls Blockcopolymere von radialer Gestalt sowie sternförmige und lineare Multiblockcopolymere.

Anstelle der bevorzugten Polystyrolblöcke können als Vinylaromaten auch Polymerblöcke auf Basis anderer aromatenhaltiger Homo- und Copolymere (bevorzugt $C_8$- bis $C_{12}$-Aromaten) mit Glasübergangstemperaturen von größer 75 °C genutzt werden wie zum Beispiel $\alpha$-methylstyrolhaltige Aromatenblöcke. Weiterhin können auch gleiche oder unterschiedliche A-Blöcke enthalten sein.

Vinylaromaten zum Aufbau des Blocks A umfassen bevorzugt Styrol, $\alpha$-Methylstyrol und/oder andere Styrol-Derivate. Der Block A kann somit als Homo- oder Copolymer vorliegen. Besonders bevorzugt ist der Block A ein Polystyrol.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock Bein Polyisopren oder ein Polybutadien oder ein Polymer aus einem Gemisch aus Butadien und Isopren. Ganz besonders bevorzugt ist der Block B ein Polybutadien.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 25 °C insbesondere mindestens 50 °C und für B-Blöcke höchstens 25 °C insbesondere höchstens -25 °C) wider. Diese Angaben beziehen sich auf die reinen, unabgemischten Blockcopolymere und können zum Beispiel mittels DSC (Test VIII) ermittelt werden.

Der Anteil an Hartblock in den Blockcopolymeren liegt bei mindestens 12 Gew.-% und maximal bei 40 Gew.-%, bevorzugt bei mindestens 15 Gew.-% und maximal bei 35 Gew.-% und sehr bevorzugt bei mindestens 20 Gew.-%.

In einer bevorzugten Ausgestaltung beträgt der Anteil der Vinylaromatenblockcopolymere, insbesondere Styrolblockcopolymere in Summe bezogen auf die gesamte Haftklebemasse mindestens 39,8 Gew.-% und maximal 51,8 Gew.-%, bevorzugt mindestens 42 Gew.-% und maximal 50 Gew.-%, weiter bevorzugt mindestens 45 Gew.-% und maximal 48 Gew.-%.

Ein zu geringer Anteil an Vinylaromatenblockcopolymeren hat zur Folge, dass die Wärmescherfestigkeit der Haftklebemasseschicht relativ niedrig ist. Ein zu hoher Anteil an Vinylaromatenblockcopolymere hat wiederum zur Folge, dass die Haftklebemasseschicht kaum noch haftklebrig ist. Es leidet zudem die Schockbeständigkeit.

Die aus den A- und B-Blöcken resultierenden Blockcopolymere können gleiche oder unterschiedliche B-Blöcke enthalten, auch im Hinblick auf die Mikrostruktur. Mit "Mikrostruktur" ist das relative Verhältnis der für Polybutadien, Polyisopren oder ein anderes konjugiertes Dien wie insbesondere 1,3-Dien möglichen Monomerverknüpfungsarten 1,4-cis (in Polybutadien und Polyisopren), 1,4-trans (in Polybutadien und Polyisopren), 1,2 (in Polybutadien und Polyisopren) und 3,4 (in Polyisopren) gemeint; bevorzugt wird ein 1,4-Anteil (cis + trans) von > 80 Gew.-%, sehr bevorzugt von > 85 Gew.-%, jeweils bezogen auf die Polydienblöcke und ein 1,4-cis-Anteil von > 40 Gew.-% bezogen auf die Polydienblöcke; entsprechend beträgt der Anteil an 1,2- und/oder etwaig vorhandener 3,4-verknüpften Monomere in Summe, d.h. der sogenannte Vinyl-Anteil bestimmt nach Test IX, höchstens 20 Gew.-%, bevorzugt höchstens 17 Gew.-%, sehr bevorzugt höchstens 13 Gew.-%. Ein hoher Anteil an 1,4-Verknüpfung und insbesondere 1,4-cis-Verknüpfung der Monomereinheiten in den Polydien-Blöcken bzw. ein geringer Anteil an Vinyl-Gruppen führt zu einer geringeren Glasübergangstemperatur, so dass eine gute Schockresistenz auch in kalter Umgebung erreicht werden kann.

Polybutadien ist auch deshalb bevorzugt als Sorte für den B-Block bzw. B-Blöcke. In einer alternativen Ausführungsform beziehen sich die quantitativen Angaben zu den Monomerverknüpfungsarten, wie insbesondere zum Vinylanteil, anstelle von Gew.-% auf mol-%.

Kommerziell erhältliche Blockcopolymer-Typen weisen häufig eine Kombination aus Polymeren unterschiedlicher Architektur auf. So enthält beispielsweise Europrene Sol T190, nominell ein lineares Polystyrol-Polyisopren Triblockcopolymer, gemäß Herstellerangabe (Versalis Europrene Sol T / TH Technical Broshure, 2018) 25 % Diblockcopolymer. Die oben gemachten Angaben zur Molmasse der Blockcopolymere beziehen sich jeweils auf diejenige Polymermode, die der in dem entsprechenden Zusammenhang genannten Blockcopolymerarchitektur von einem Fachmann zugeordnet werden kann. Angaben zur Molmasse sind in diesem Zusammenhang als Peakmolmasse zu verstehen.

GPC (Test la) erlaubt üblicherweise die Feststellung der Molmasse der einzelnen Polymermoden in einer Mischung aus verschiedenen Blockcopolymeren.

*Klebharzkomponente (b)*

Die erfindungsgemäße Haftklebemasseschicht weist neben dem mindestens einen Polyvinylaromaten-Polydien-Blockcopolymer mindestens ein Klebharz auf, um die Adhäsion in gewünschter Weise zu erhöhen.

Unter einem "Klebharz" wird entsprechend dem allgemeinem Fachmannverständnis ein oligomeres oder polymeres Harz verstanden, das die Adhäsion (den Tack, die Eigenklebrigkeit) der Haftklebemasseschicht im Vergleich zu der keinen Klebharz enthaltenden, ansonsten aber identischen Haftklebemasseschicht erhöht. Klebharze sind spezielle Verbindungen mit im Vergleich zu den Elastomeren niedriger Molmasse, üblicherweise mit einem gewichtsmittleren Molekulargewicht (Test Ib) Mw < 5.000 g/mol. Typischerweise beträgt das gewichtsmittlere Molekulargewicht von 400 bis 5.000 g/mol, bevorzugt von 500 bis 2.000 g/mol.

Das Klebharz sollte mit dem Elastomerblock der Blockcopolymere verträglich sein.

Besonders bevorzugt handelt es sich bei den Klebharzen zu mindestens 75 Gew.-% (bezogen auf den Gesamtklebharzanteil) um Kohlenwasserstoffharze oder Terpenharze oder eine Mischung dergleichen.

Die Klebharzkomponente (b) der Haftklebemasseschicht enthält zu mindestens 75 Gew.-% bezogen auf die Klebharzkomponente zumindest ein Klebharz, das einen DACP (diacetone alcohol cloud point, Test II) von mindestens -20 °C, bevorzugt mindestens 0 °C, und eine Erweichungstemperatur (Ring & Ball, Test IIIa) von mindestens 85 °C, vorzugsweise mindestens 100 °C, und höchstens +140 °C aufweist. Geeignete Klebharze sind, ohne sich einschränken zu wollen, unpolare Kohlenwasserstoffharze, zum Beispiel hydrierte und nicht hydrierte Polymerisate des Dicyclopentadiens, nicht hydrierte, partiell, selektiv oder vollständig hydrierte Kohlenwasserstoffharze auf Basis von Cs-, $C_5/C_9$- oder $C_9$-Monomerströmen, und Polyterpenharze auf Basis von $\alpha$-Pinen und/oder $\beta$-Pinen und/oder $\delta$-Limonen. Erfind-ungsgemäß bevorzugt handelt es sich bei den Klebharzen somit zu mindestens 75 Gew.-% (bezogen auf den Gesamtklebharzanteil) um Kohlenwasserstoffharze oder Terpenharze oder eine Mischung dergleichen. Vorgenannte Klebharze können sowohl allein als auch im Gemisch eingesetzt werden, wobei der Fachmann für Polyisopren-Blockcopolymere bzw. Polybutadien-Blockcopolymere gemäß gängiger Leitlinien zur Kompatibilität aus den Klebharzen der auswählt. Hierzu kann beispielsweise eine Publikation von C. Donker zu Rate gezogen werden (C. Donker, Proceedings of the Pressure Sensitive Tape Council, 2001, S. 149-164).

Kolophoniumharze, hydriert oder nicht hydriert, sind bis zu einem maximalen Anteil von 25 Gew.-% bezogen auf die Gesamtmasse der Klebharze in der Klebemassenschicht vorhanden, damit die Klebemasseschicht nicht zu polar wird.

Der Anteil an Klebharzkomponente (b) in der Haftklebemasseformulierung wirkt sich positiv auf die Verklebungsfestigkeit und Schockbeständigkeit aus. Daher sollte der Klebharzanteil nicht zu gering sein. Es hat sich allerdings gezeigt, dass ein zu hoher Anteil an Klebharz(en) einen negativen Einfluss auf die Wärmescherfestigkeit hat. Der Anteil an Klebharzkomponente (b liegt daher im Sinne dieser Erfindung bei mindestens 35 Gew.-% und maximal 58 Gew.-%, bevorzugt bei mindestens 47 Gew-% und maximal 55 Gew.-%, jeweils in Bezug auf die Gesamtklebemassezusammensetzung.

*Weichmacherkomponente (c)*

Der Weichmacher dient zur finalen Feineinstellung der Kohäsions-/Adhäsions-Balance und hat selbst einen positiven Effekt auf die Schockresistenz. Es handelt sich dabei um ein oder mehrere Weichharze und/oder ein oder mehrere Mineralöle mit einer Erweichungstemperatur (Ring & Ball, Test IIIa) unter 30 °C. Bevorzugt wird ein Weichharz oder Weichharzgemisch und sehr bevorzugt ein Weichharz oder Weichharzgemisch mit einer Schmelzviskosität bei 25 °C und 1 Hz (Test IV) von zumindest 20 Pa*s, bevorzugt von zumindest 50 Pa*s. Bei dem Weichharz kann es sich sehr bevorzugt um ein Kohlenwasserstoff- oder Polyterpen-basierendes Weichharz handeln.

Der Weichmacher oder das Weichmachergemisch kommt in Bezug auf die Gesamtklebmasseformulierung mit einem Anteil von 2 Gew.-%, bevorzugt von mindestens 3 Gew.-%, und höchstens 15 Gew.-%, bevorzugt höchstens 10 Gew.-%, bezogen auf die Gesamtklebemassezusammensetzung zum Einsatz.

Es hat sich überraschend gezeigt, dass Klebharze und Weichmacher einen positiven Einfluss auf die Schockresistenz haben und dass für die Lösung der gestellten Aufgabe ein Minimumgehalt nicht nur an Klebharzkomponente b) und Weichmacherkomponente c) vorhanden sein muss, sondern auch ein Minimum an Summe aus diesen beiden Komponenten. Erfindungsgemäß beträgt die Summe aus Klebharzkomponente (b) und Weichmacherkomponente (c) mindestens 48 Gew.-% und höchstens 60 Gew.-%, bevorzugt mindestens 50 Gew.-% und höchstens 58 Gew.-%.

Es hat sich ebenfalls überraschend gezeigt, dass bei der Auswahl von Klebharzart / und -menge einerseits und Weichmacherart / und -menge andererseits auf die jeweiligen Erweichungstemperaturen geachtet werden muss. So wurde gefunden, dass ein Minimum an harmonischem Mittel (Test IIIb) der Erweichungstemperaturen aller einge-

setzten Klebharze und Weichmacher eingehalten werden sollte, um die geforderte Schockbeständigkeit zu erreichen. Dieser Wert liegt bei mindestens 95 °C und beträgt höchstens 125 °C.

*Optionale weitere Additive (d)*

Die Klebemasseschicht enthält 0 bis 18 Gew.-%, vorzugsweise bis zu 10 Gew.-% weitere Additive.
Der Klebemasse können als weitere Additive vor allem Schutzmittel zugesetzt werden. Hier seien Alterungsschutzmittel primärer und sekundärer Art, Licht- und UV-Schutzmittel sowie Flammschutzmittel genannt, aber auch Füllstoffe, Farbstoffe und Pigmente. Die Klebemasseschicht kann so beliebig gefärbt oder weiß, grau oder schwarz sein.
Als solche oder andere weitere Additive können typischerweise genutzt werden:

- primäre Antioxidantien wie zum Beispiel sterisch gehinderte Phenole, vorzugsweise mit einem Anteil von 0,2 bis 1 Gew.-% bezogen auf das Gesamtgewicht der Haftklebemasse,
- sekundäre Antioxidantien, wie zum Beispiel Phosphite oder Thioether, vorzugsweise mit einem Anteil von 0,2 bis 1 Gew.-% bezogen auf das Gesamtgewicht der Haftklebemasse,
- Prozessstabilisatoren wie zum Beispiel C-Radikalfänger, vorzugsweise mit einem Anteil von 0,2 bis 1 Gew.-% bezogen auf das Gesamtgewicht der Haftklebemasse,
- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Haftklebemasse,
- Verarbeitungshilfsmittel, vorzugsweise mit einem Anteil von 0,2 bis 1 Gew.-% bezogen auf das Gesamtgewicht der Haftklebemasse
- Endblockverstärkerharze, falls gewünscht vorzugsweise mit einem Anteil von 0,2 bis 10 Gew.-% bezogen auf das Gesamtgewicht der Haftklebemasse sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Haftklebemasse.

Die Art und Menge der Abmischkomponenten kann bedarfsweise ausgewählt werden und letztere auch höher als die bevorzugten Obergrenzen liegen. Erfindungsgemäß ist es auch, wenn die Klebemasseschicht einige oder sogar alle der genannten Zuschlagstoffe jeweils nicht aufweist.

(e) Mikroballons

Die vorliegende Erfindung betrifft eine geschäumte Haftklebemasseschicht, die Mikroballons enthält, die zumindest teilweise expandiert sind.
Der Begriff "zumindest teilweise expandierte Mikroballons" wird erfindungsgemäß typischerweise so verstanden, dass die Mikroballons in Ihrer Gesamtheit zumindest soweit expandiert sind, dass damit eine Dichteverringerung der Klebmasse in einem technisch sinnvollen Ausmaß im Vergleich zu derselben Klebmasse mit den unexpandierten Mikroballons bewirkt wird. Dies bedeutet, dass die Mikroballons nicht zwingend vollständig expandiert sein müssen. Bevorzugt sind die einzelnen Mikroballons jeweils für sich betrachtet auf mindestens das Doppelte ihrer maximalen Ausdehnung im unexpandierten Zustand expandiert. Zudem kann mit dem Begriff "zumindest teilweise expandierte Mikroballons" auch gemeint sein, dass nur ein Teil der in Betracht kommenden Mikroballons (an)expandiert ist. In einer bevorzugten Ausführungsform der geschäumten Haftklebemasseschicht sind die Mikroballons vollexpandiert, d.h. die Schicht ist derart geschäumt worden, dass bei gegebenem Mikroballonanteil eine minimale Dichte der Schicht erzielt wird.
Die Schäumung erfolgt insbesondere durch das Einbringen und nachfolgende Expandieren von Mikroballons.
Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.
Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 μm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Nouryon, ein anderes Matsumoto Microsphere® F/FN von der Firma Matsumoto Yushi Seiyaku.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasseschicht denkbar.

Eine erfindungsgemäße geschäumte Haftklebemasseschicht kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® von der Firma Chase Corp. oder mit der Typenbezeichnung Expancel DE (Dry Expanded) von der Firma Nouryon kommerziell erhältlich.

Erfindungsgemäß bevorzugt weisen in der geschäumten Haftklebemasseschicht mindestens 90 % aller von Mikroballons gebildeten Hohlräume einen maximalen Durchmesser von 20 bis 75 μm, stärker bevorzugt von 25 bis 65 μm, auf. Unter dem "maximalen Durchmesser" wird die maximale Ausdehnung eines Mikroballons in beliebiger Raumrichtung der Kryobruchkante im REM verstanden.

Die Bestimmung der Durchmesser erfolgt anhand einer Kryobruchkante im Rasterelektronenmikroskop (REM) bei 500-facher Vergrößerung. Von jedem einzelnen Mikroballon wird grafisch der Durchmesser ermittelt.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Klebemasseschicht liegt erfindungsgemäß typischerweise bei 0,2 Gew.-% bis 2,5 Gew.-%, bevorzugt zwischen 0,5 Gew.-% und 2,0 Gew.-% und ganz besonders zwischen 0,7 Gew.-% und 1,7 Gew.-%, jeweils bezogen auf die Gesamtzusammensetzung der Klebemasseschicht. Die Angaben beziehen sich hinsichtlich der schäumbaren Klebemasse typischerweise auf unexpandierte Mikroballons, und hinsichtlich der geschäumten Klebemasseschicht typischerweise auf die eingesetzten unexpandierten oder eingesetzten vorexpandierten Mikroballons.

Eine erfindungsgemäß genutzte, expandierbare Mikrohohlkugeln enthaltende Haftklebemasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nichtthermoplastischem Glas.

Wichtiger als die Menge an eingesetzten Mikroballons im Hinblick auf die Leistungsfähigkeit der Haftklebemasseschicht ist ihre Dichte. Die Dichte der erfindungsgemäßen geschäumten Haftklebemasseschicht, wie gemäß Test IX bestimmt, liegt erfindungsgemäß bei mindestens 600 kg/m$^3$ und höchstens 950 kg/m$^3$, bevorzugt bei mindestens 650 kg/m$^3$ und höchstens 900 kg/m$^3$ und sehr bevorzugt bei mindestens 700 kg/m$^3$ und höchstens 850 kg/m$^3$. Bei gleicher Einsatzmenge können mit größeren Mikroballons geringere Dichten erreicht werden. Um auf die im Sinne der vorliegenden Aufgabe gewünschte Leistungsfähigkeit zu kommen, werden von größeren Mikroballons entsprechend weniger eingesetzt als von kleineren. Der typische Einsatzmengenbereich ist insbesondere vorteilhaft für Mikroballons mit einem maximalen Durchmesser von unterhalb 40 μm. Bei Mikroballons mit einem Durchmesser in expandierter Form von 40 μm werden weniger als 2,0 % eingesetzt.

Die Erfindung betrifft zudem Selbstklebeprodukte, vor allem doppelseitig klebende Selbstklebeprodukte, d.h. insbesondere doppelseitige Klebebänder, die zumindest eine erfindungsgemäße Haftklebemasseschicht enthalten. Insbesondere vorteilhaft sind Transferklebebänder. Alternativ kann das Selbstklebeprodukt auch einen (permanenten) Zwischenträger enthalten.

Unter Verwendung zumindest einer erfindungsgemäßen Haftklebemasseschicht hergestellte Selbstklebebänder können dementsprechend insbesondere gestaltet sein als

- einschichtige, beidseitig selbstklebende Klebebänder, sogenannte "Transfertapes" aus einer einzigen erfindungsgemäßen Haftklebemasseschicht;
- mehrschichtige beidseitig selbstklebende Klebebänder, bei denen die Schichten jeweils aus den erfindungsgemäßen Haftklebemasseschichten bestehen oder einer erfindungsgemäßen Haftklebemasseschicht und einer nicht erfindungsgemäßen Haftklebemasseschicht;
- beidseitig selbstklebend ausgerüstete Klebebänder mit einem Zwischenträger (ein sogenannter Permanentträger), der entweder in einer Klebemassenschicht oder zwischen zwei Klebemassenschichten angeordnet ist.

Bevorzugt sind einschichtige, beidseitig selbstklebende Produkte aus einer einzigen erfindungsgemäßen Haftklebemasseschicht.

Bevorzugt ist zudem eine Ausführungsform des Selbstklebeprodukts, bei dem der Zwischenträger nur aus einer einzigen Schicht, insbesondere einer Polymerfolie besteht. Bevorzugt ist zudem, wenn der Zwischenträger zumindest eine Schicht einer Formulierung enthält, die zumindest eine Sorte eine Vinylaromaten-Blockcopolymer enthält und zumindest eine Sorte eines Klebharzes. Dabei können die doppelseitigen Produkte, unabhängig von der Art des Zwischenträgers, einen symmetrischen oder einen asymmetrischen Produktaufbau hinsichtlich Art der Haftklebemasseschichten wie beispielsweise Zusammensetzung und/oder Dicke der Haftklebemasseschichten aufweisen.

Typische Konfektionierformen der erfindungsgemäßen Haftklebemasseschicht sind Klebebandrollen sowie Klebestreifen, wie sie zum Beispiel in Form von Stanzlingen erhalten werden.

Vorzugsweise weisen alle Schichten im Wesentlichen die Form eines Quaders auf. Weiter vorzugsweise sind alle Schichten vollflächig miteinander verbunden.

In einer weiteren Auslegung weicht die Form von Stanzlingen von der eines Quaders ab. Insbesondere vorteilhaft können Formen sein, bei der Winkel zwischen Breite und Länge des Stanzlings größer oder kleiner als 90° sind, d. h. Verjüngungen aufweisen. Stanzlinge können auch ein Gebilde aus Klebebandstegen sein, die auch klebebandfreie Bereiche umlaufen. Stanzlinge können desweitere verschiedene Arten an anderweitigen Ausnehmungen aufweisen.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sein können als die Dicke. Die Dicke ist über die gesamte durch Länge und Breite bestimmte Flächenausdehnung des Klebebands möglichst gleich, vorzugsweise im Wesentlichen gleich.

Das Klebeband liegt insbesondere in Bahnform vor. Unter einer Bahn wird ein Objekt verstanden, dessen Länge um ein Vielfaches größer ist als die Breite und die Breite entlang der gesamten Länge in etwa vorzugsweise genau gleichbleibend ausgebildet ist.

Das Klebeband kann in Form einer Rolle, also in Form einer archimedischen Spirale auf sich selbst aufgerollt, hergestellt werden.

Denkbar sind auch Anwendungen erfindungsgemäßer Klebemasseschichten in Selbstklebeprodukten, d.h. insbesondere Klebebändern, die sich durch dehnendes Verstrecken, beispielsweise in der Verklebungsebene, im Wesentlichen rückstands- und zerstörungsfrei aus einer Verklebung herauslösen lassen, so genannte Selbstklebestrips.

Damit einschlägig bekannte strippfähige Klebfolienstreifen leicht und rückstandsfrei wieder abgelöst werden können, müssen sie bestimmte klebtechnische Eigenschaften besitzen:
Beim Verstrecken muss die Klebrigkeit der Klebfolienstreifen deutlich sinken. Je niedriger die Klebleistung im verstreckten Zustand ist, umso weniger stark wird der Untergrund beim Ablösen beschädigt.

Besonders deutlich ist diese Eigenschaft bei Klebemassen auf Basis von Vinylaromatenblockcopolymeren zu erkennen, bei denen in der Nähe der Streckgrenze die Klebrigkeit auf unter 10 % sinkt.

Damit strippfähige Klebebänder leicht und rückstandsfrei wieder abgelöst werden können, müssen sie neben den oben beschriebenen klebtechnischen auch einige bestimmte mechanische Eigenschaften besitzen.

Besonders vorteilhaft ist das Verhältnis der Reißkraft und der Strippkraft größer als zwei, bevorzugt größer als drei. Derartige Strips weisen also neben der Kombination aus hoher Wärmescherfestigkeit, hoher Verklebungsfestigkeit und hoher Schockresistenz zusätzlich noch eine gute Reißfestigkeit auf.

Dabei ist die Strippkraft diejenige Kraft, die aufgewendet werden muss, um einen Klebestreifen aus einer Klebfuge durch paralleles Ziehen in Richtung der Verklebungsebene wieder zu lösen. Diese Strippkraft setzt sich aus der Kraft, die wie oben beschrieben für das Ablösen des Klebebandes von den Verklebungsuntergründen nötig ist, und der Kraft, die zur Verformung des Klebebandes aufgewendet werden muss, zusammen. Die zur Verformung des Klebebandes erforderliche Kraft ist abhängig von der Dicke des Klebfolienstreifens.

Die zum Ablösen benötigte Kraft ist dagegen in dem betrachteten Dickenbereich des Klebfolienstreifens (50 $\mu$m bis 800 $\mu$m) unabhängig von der Dicke der Klebestreifen.

Die Zugfähigkeit steigt hingegen proportional zur Dicke der Klebestreifen an. Hieraus folgt, dass für Selbstklebebänder mit einem Einschichtaufbau, wie sie in der DE 33 31 016 C2 offenbart sind, die Zugfestigkeit unterhalb einer bestimmten Dicke kleiner ist als die Abzugskraft. Oberhalb einer bestimmten Dicke hingegen ist das Verhältnis von Abzugskraft zur Strippkraft größer als zwei.

Erfindungsgemäße geschäumte Haftklebemasseschichten kommen wie vorstehend beschrieben in Selbstklebeprodukten zum Einsatz. Diese Selbstklebeprodukte können als Klebefolie, Klebeband oder Klebestanzling ausgestaltet sein. Die Selbstklebeprodukte enthalten zumindest eine erfindungsgemäße geschäumte Haftklebemasseschicht.

Vorzugsweise liegt die Schichtdicke zwischen 15 $\mu$m und 500 $\mu$m, bevorzugter zwischen 25 $\mu$m und 250 $\mu$m, insbesondere beträgt sie höchstens 150 $\mu$m oder sogar höchstens 100 $\mu$m. Beispielschichtdicken liegen bei 30 $\mu$m, 50 $\mu$m, 75 $\mu$m, 100 $\mu$m, 125 $\mu$m, 150 $\mu$m, 200 $\mu$m und 250 $\mu$m. Nicht ausgeschlossen sind jedoch auch deutlich höhere Schichtdicken von 500 bis 2000 $\mu$m, wie insbesondere 1000 bis 1500 $\mu$m. Beispielsweise kann die Dicke 750 oder 1000 $\mu$m betragen. Die Selbstklebeprodukte sind typischerweise beidseitig klebend ausgestaltet. Besonders gut lassen sich die Vorzüge der erfindungsgemäßen Formulierungen in doppelseitig klebenden Selbstklebeprodukten nutzen, wenn zwei Bauteile, und insbesondere in einem Mobilgerät, miteinander verklebt werden sollen.

Vom erfinderischen Gedanken umfasst sind auch Aufbauten mit einem Zwischenträger (auch Permanentträger genannt) innerhalb des Selbstklebeprodukts, insbesondere in der Mitte der einzigen Haftklebemassenschicht. Insbesondere ist der Zwischenträger dehnbar, wobei die Dehnbarkeit des Zwischenträgers für manche Anwendungen ausreichend sein muss, um ein Ablösen des Klebstreifens durch dehnendes Verstrecken zu gewährleisten. Als Zwischenträger können zum Beispiel sehr dehnfähige Folien dienen. Eine maximale Dehnbarkeit der Folie in mindestens einer Richtung, vorzugsweise in beiden Richtungen, von mindestens 250 %, bevorzugt von mindestens 400 % (ISO 527-3) ist vorteilhaft. Beispiele für vorteilhaft einsetzbare dehnbare Zwischenträger sind Ausführungen aus WO 2011/124782 A1, DE 10 2012 223 670 A1, WO 2009/114683 A1, WO 2010/077541 A1, WO 2010/078396 A1.

Zur Herstellung der dehnbaren Zwischenträgerfolie werden filmbildende oder extrusionsfähige Polymere eingesetzt, die zusätzlich mono- oder biaxial orientiert sein können.

In einer Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern wie zum Beispiel die Erweichungstemperatur und/oder die Reißfestigkeit.

Bevorzugt lassen sich Polyurethane als Ausgangsmaterialien für dehnbare Zwischenträgerschichten verwenden. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Rohstoffe, die dem Formulierer hierzu zur Verfügung stehen, sind zum Beispiel in EP 0 894 841 B1 und EP 1 308 492 B1 genannt. Dem Fachmann sind weitere Rohstoffe bekannt, aus denen erfindungsgemäße Zwischenträgerschichten aufgebaut werden können.

Weiterhin ist es denkbar, Kautschuk basierende Materialien in Zwischenträgerschichten einzusetzen, um Dehnbarkeit zu realisieren. Als Kautschuk oder Synthesekautschuk oder daraus erzeugten Verschnitten als Ausgangsmaterial für dehnbare Zwischenträgerschichten kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) und der Polyurethane und/oder deren Verschnitten gewählt werden.

Besonders vorteilhaft einsetzbar als Materialien für dehnbare Zwischenträgerschichten sind Blockcopolymere. Dabei sind einzelne Polymerblöcke kovalent miteinander verknüpft. Die Blockverknüpfung kann in einer linearen Form vorliegen, aber auch in einer sternförmigen oder Pfropfcopolymervariante. Ein Beispiel für ein vorteilhaft einsetzbares Blockcopolymer ist ein lineares Triblockcopolymer, dessen zwei endständige Blöcke eine Erweichungstemperatur von mindestens 40 °C, bevorzugt mindestens 70 °C aufweisen und dessen Mittelblock einer Erweichungstemperatur von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Erweichungstemperatur jeweils von mindestens 40 °C, bevorzugt mindestens 70 °C aufweisen und die über zumindest einen Polymerblock mit einer Erweichungstemperatur von höchstens 0 °C, bevorzugt höchstens -30 °C in der Polymerkette voneinander separiert sind. Beispiele für Polymerblöcke sind Polyether wie zum Beispiel Polyethylenglykol, Polypropylenglykol oder Polytetrahydrofuran, Polydiene, wie zum Beispiel Polybutadien oder Polyisopren, hydrierte Polydiene, wie zum Beispiel Polyethylenbutylen oder Polyethylenpropylen, Polyester, wie zum Beispiel Polyethylenterephthalat, Polybutandioladipat oder Polyhexandioladipat, Polycarbonat, Polycaprolacton, Polymerblöcke vinylaromatischer Monomere, wie zum Beispiel Polystyrol oder Poly-[$\alpha$]-Methylstyrol, Polyalkylvinylether, Polyvinylacetat, Polymerblöcke [$\alpha$],[$\beta$]-ungesättigter Ester wie insbesondere Acrylate oder Methacrylate. Dem Fachmann sind entsprechende Erweichungstemperaturen bekannt. Alternativ schlägt er sie beispielsweise im Polymer Handbook [J. Brandrup, E. H. Immergut, E. A. Grulke (Hrsg.), Polymer Handbook, 4. Aufl. 1999, Wiley, New York] nach. Polymerblöcke können aus Copolymeren aufgebaut sein.

Zur Herstellung eines Zwischenträgermaterials kann es auch hier angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Des Weiteren sind bahnförmige Schaumstoffe (beispielsweise aus Polyethylen und Polyurethan) geeignet.

Die Zwischenträger können mehrlagig ausgestaltet sein.

Des Weiteren können die Zwischenträger Deckschichten aufweisen, beispielsweise Sperrschichten, die ein Eindringen von Komponenten aus der Klebemasse in den Zwischenträger oder umgekehrt unterbinden. Diese Deckschichten können auch Barriereeigenschaften haben, um so ein Durchdiffundieren von Wasserdampf und/oder Sauerstoff zu verhindern.

Zur besseren Verankerung der Haftklebemassen auf dem Zwischenträger können die Zwischenträger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Vom erfinderischen Gedanken umfasst sind zudem Aufbauten mit einem Zwischenträger eines hohen Elastizitätsmoduls und geringer Dehnbarkeit innerhalb des Selbstklebeprodukts, insbesondere in der Mitte der einzigen Haftklebemassenschicht, wobei der Elastizitätsmodul des Zwischenträgers vorteilhaft bei mindestens 750 MPa, bevorzugt bei mindestens 1 GPa (ISO 527-3) liegt und die maximale Dehnbarkeit (nach ISO 527-3) insbesondere bei höchstens 200 % liegt. Solche Aufbauten sind besonders gut in Stanzprozessen einsetzbar und erleichtern die Handhabbarkeit im Applikationsprozess. Auch sind solcher Art gestaltete Permanentträger von Vorteil, wenn ein Wiederablösen des Selbstklebeprodukts durch Schälen ermöglicht werden soll.

Zur Herstellung solcher Zwischenträgerfolien werden filmbildende oder extrusionsfähige Polymere eingesetzt, die insbesondere zusätzlich mono- oder biaxial orientiert sein können.

Als Folienmaterial für die zumindest eine Lage einer Folie für diese Auslegungsform bieten sich insbesondere Polyesterfolien und hier besonders bevorzugt Folien auf Basis von Polyethylenterephthalat (PET) an. Polyesterfolien sind bevorzugt biaxial verstreckt. Weiterhin sind Folien aus Polyolefinen, insbesondere aus Polybuten, Cyclo-Olefin-Copolymer, Polymethylpenten, Polypropylen oder Polyethylen, zum Beispiel aus monoaxial verstrecktem Polypropylen, biaxial verstrecktem Polypropylen oder biaxial verstrecktem Polyethylen denkbar. Diese Aufzählung soll Beispiele aufzeigen, dem Fachmann sind weitere Systeme bekannt, die dem Gedanken der vorliegenden Erfindung entsprechen.

Zur Herstellung eines Zwischenträgermaterials kann es auch hier angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Die Zwischenträger können mehrlagig ausgestaltet sein.

Des Weiteren können die Zwischenträger Deckschichten aufweisen, beispielsweise Sperrschichten, die ein Eindringen von Komponenten aus der Klebemasse in den Zwischenträger oder umgekehrt unterbinden. Diese Deckschichten können auch Barriereeigenschaften haben, um so ein Durchdiffundieren von Wasserdampf und/oder Sauerstoff zu verhindern.

Zur besseren Verankerung der Haftklebemassen auf dem Zwischenträger können die Zwischenträger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Die Dicke der Zwischenträgerschicht, unabhängig von ihrer Dehnbarkeit, liegt dabei im Bereich von 2 μm bis 200 μm, bevorzugt zwischen 5 und 100 μm und insbesondere zwischen 10 und 80 μm.

Schließlich kann das Selbstklebeprodukt, wie insbesondere Klebeband, ein- oder beidseitig mit einem Liner, also einem temporären Träger, der ein- oder beidseitig antiadhäsiv beschichtet ist, eingedeckt sein.

Ein Liner (Trennpapier, Trennfolie) ist nicht Bestandteil eines Klebebandes sondern nur ein Hilfsmittel zu dessen Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Die Herstellung der Formulierungen, d.h. Haftklebemassen, und der daraus erzeugten Beschichtungen beziehungsweise Selbstklebeprodukte kann unter Verwendung organischer Lösemittel oder lösemittelfrei erfolgen.

Entsprechend ist ein Verfahren Gegenstand der Erfindung, bei dem aus einer Haftklebemasse eine Haftklebemasseschicht geformt wird. Es resultiert letztlich eine Haftklebemasseschicht mit einer Schichtdicke von typischerweise zwischen 15 μm und 500 μm, bevorzugt zwischen 20 μm und 250 μm, und sehr bevorzugt zwischen 25 μm und 150 μm. Beispielschichtdicken, die über dieses Verfahren erzeugt werden, liegen bei 30 μm, 50 μm, 75 μm, 100 μm, 150 μm, 200 μm und 250 μm. Nicht ausgeschlossen sind jedoch auch deutlich höhere Schichtdicken wie 500 μm, 750 μm, 1000 μm oder sogar 2000 μm.

Bevorzugt ist im erfindungsgemäßen Verfahren das Substrat ein Flächenelement, insbesondere ein Trägermaterial, eine Folie, ein Releaseliner, ein Transfermaterial und/oder ein Deckmaterial. Substrate können auch die Oberflächen der Fertigungsstraße im Herstellungsverfahren sein. Dabei wird eine Haftklebemasse zu einer Haftklebemasseschicht einer Dicke von typischerweise mindestens 15 μm verarbeitet und die flächig aufgebrachte Haftklebemasseschicht wird optional getrocknet beziehungsweise die Lösemittel werden entfernt. Bevorzugt wird eine lösungsmittelfreie Schmelzklebemasse verarbeitet.

Zum Auftragen der Haftklebemasse können unter anderem als Beschichtungsverfahren der erfindungsgemäß verwendeten Flächenelemente Rakelverfahren, Düsenrakelverfahren, Rollstabdüsenverfahren, Extrusionsdüsenverfahren, Giessdüsen- und Giesserverfahren zur Anwendung kommen. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren. Bevorzugt werden Hotmeltverfahren (Extrusion, Düse).

Gegebenenfalls werden weitere Schichten oder Materiallagen anschließend inline oder offline zukaschiert oder beschichtet, so dass auch mehrschichtige /-lagige Produktaufbauten erzeugt werden können.

In einer weiteren Ausgestaltung des erfindungsgemäßen Verfahrens wird die erhaltene Kombination aus Flächenelement und Haftklebemasse zu Meterware umfassend Bänder zugeschnitten und/oder Stanzlinge ausgestanzt und optional werden die Bänder zu einer Banderole aufgerollt.

Schließlich erstreckt sich die Erfindung auch auf Klebeverbunde, die durch Verwendung von Selbstklebeprodukten, die zumindest eine erfindungsgemäße Haftklebemasseschicht enthalten, erhalten wurden, also einen Verbund aus einem Haftklebestreifen und zwei Bauteilen eines Mobilgerätes oder in einem Mobilgerät, die mit dem Selbstklebestreifen verbunden sind.

Die Erfindung bezieht sich darüber hinaus besonders bevorzugt auf die Verklebung von Mobilgeräten, da das erfindungsgemäß eingesetzte Klebeband hier aufgrund der unerwartet guten Eigenschaften (sehr hohe Schockresistenz) einen besonderen Nutzen hat. Nachfolgend sind einige portable Geräte, d.h. Mobilgeräte, aufgeführt, ohne sich durch die konkret genannten Vertreter in dieser Liste bezüglich dem Gegenstand der Erfindung unnötig beschränken zu wollen.

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für z.B. CD, DVD, Blueray, Kassetten, USB, MP3, Kopfhörer
- Schnurlose Telefone, Mobiltelefone, Smartphones, Funksprechgeräte, Freisprechgeräte, Personenrufgeräte (Pager, Pieper)
- Mobile Defibrilatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

**Prüfmethoden**

Alle Messungen zur Bestimmung von Klebeigenschaften wurden, sofern nichts anderes angegeben ist, bei 23 °C und 50 % rel. Luftfeuchtigkeit durchgeführt.

*Test I - Molmasse (GPC)*

(a) Peakmolmasse von einzelnen Blockcopolymermoden

GPC bietet sich als messtechnisches Verfahren zur Bestimmung der Molmasse einzelner Polymermoden in Gemischen verschiedener Polymere an. Für die im Sinne dieser Erfindung einsetzbaren durch lebende anionische Polymerisation hergestellten Blockcopolymere sind die Molmassenverteilungen typischerweise ausreichend eng, so dass Polymermoden, die sich Triblockcopolymeren, Diblockcopolymeren oder Multiblockcopolymeren zuordnen lassen, ausreichend voneinander aufgelöst im Elugramm auftreten. Es lässt sich dann die Peakmolmasse für die einzelnen Polymermoden aus den Elugrammen ablesen.

Peakmolmassen $M_P$ werden mittels Gelpermeationschromatographie (GPC) bestimmt. Als Eluent wird THF eingesetzt. Die Messung erfolgt bei 23 °C. Als Vorsäule wird PSS-SDV, 5 $\mu$, $10^3$ Å, ID 8,0 mm x 50 mm verwendet. Zur Auftrennung werden die Säulen PSS-SDV, 5 $\mu$, $10^3$ Å sowie $10^4$ Å und $10^6$ Å mit jeweils 10 8,0 mm x 300 mm eingesetzt. Die Probenkonzentration beträgt 4 g/l, die Durchflussmenge 1,0 ml pro Minute. Es wird gegen PS Standards gemessen ($\mu$ = $\mu$m; 1 Å = $10^{-10}$ m).

(b) gewichtsmittlere Molmasse insbesondere von Klebharzen

Das gewichtsmittlere Molekulargewicht $M_w$ (M.W.) wird mittels Gelpermeationschromatographie (GPC) bestimmt. Als Eluent wird THF eingesetzt. Die Messung erfolgt bei 23 °C. Als Vorsäule wird PSS-SDV, 5 $\mu$, $10^3$ Å, ID 8,0 mm x 50 mm verwendet. Zur Auftrennung werden die Säulen PSS-SDV, 5 $\mu$, $10^3$ Å sowie $10^4$ Å und $10^6$ Å mit jeweils ID 8,0 mm x 300 mm eingesetzt. Die Probenkonzentration beträgt 4 g/l, die Durchflussmenge 1,0 ml pro Minute. Es wird gegen PS Standards gemessen ($\mu$ = $\mu$m; 1 Å = $10^{-10}$ m).

*Test II - DACP*

In ein trockenes Probenglas werden 5,0 g Testsubstanz (das zu untersuchende Klebharzmuster) eingewogen und mit 5,0 g Xylol (Isomerengemisch, CAS [1330-20-7], $\geq$ 98,5 %, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99 %, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

*Test III - (Kleb)harzerweichungstemperatur*

(a) Für Einzelsubstanzen: Die (Kleb)harzerweichungstemperatur $T_{RB}$ wird nach der einschlägigen Methodik durchgeführt, die als Ring & Ball bekannt ist und nach ASTM E28 standardisiert ist.

(b) Harmonisches Mittel: zur Ermittlung des harmonischen Mittels der Erweichungstemperatur der Gesamtheit an Einsatzstoffen der Komponente b) und Komponente c) $T_{RB,Mittel}$ werden die Erweichungstemperaturen $T_{RB,i}$ der zum Einsatz kommenden Einzelsubstanzen i nach Test IIIa in Erfahrung gebracht und nach dem mathematischen Konzept zur Bildung eines harmonischen Mittels kalkulatorisch verarbeitet. Hierzu werden als Eingabe in den Formalismus (Gl. 1) die Erweichungstemperaturen in Kelvin $\theta_{RB,i}$ genutzt. Für die Zusammensetzung innerhalb der Kombination aus Komponente b) und Komponente c) werden Gewichtsanteile für die jeweiligen Einzelsubstanzen $x_i$ mit x = 0 ... 1 verwendet. $T_{RB,Mittel}$ wird in Einheiten von °C angegeben.

$$T_{RB,Mittel} = [\Sigma_i(x_i/\theta_{RB,i})]^{-1} - 273 \text{ K} \qquad (Gl. 1)$$

Für Mineralöl basierte Weichmacher wird folgende Annahme zur Bestimmung der Erweichungstemperatur vorgenommen. Es wird für den betrachteten Rohstoff mittels Test VIII die Glasübergangstemperatur bestimmt. Die Ring & Ball Erweichungstemperatur liegt typischerweise 50 K oberhalb der der Glasübergangstemperatur.

*Test I V - Schmelzviskosität*

Zur Bestimmung der Schmelzviskosität der Weichharze wird ein Schubspannungssweep in einem schubspannungsgeregelten DSR 200 N Rheometer der Firma Rheometrics Scientific in Rotation durchgeführt. Es kommt ein Kegel/Platte-Messsystem mit einem Durchmesser von 25 mm (Kegelwinkel 0,1002 rad) zur Anwendung, der Messkopf ist luftgelagert und geeignet für Normalkraftmessungen. Der Spalt beträgt 0,053 mm und die Messtemperatur 25 °C. Die Frequenz wird von 0,002 Hz bis 200 Hz variiert und die Schmelzviskosität bei 1 Hz registriert.

*Test V - Klebkraft*

Die Bestimmung der Klebkraft (gemäß AFERA 5001) wird wie folgt durchgeführt. Als definierter Haftgrund wird eine polierte Stahlplatte mit einer Stärke von 2 mm eingesetzt. Das zu untersuchende verklebbare Flächenelement (das rückseitig mit einer 36 $\mu$m geätzten PET-Folie als Stützfolie ausgerüstet ist) wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

*Test VI - Wärmescherfestigkeit (SAFT)*

Dieser Test dient der Schnellprüfung der Scherfestigkeit von Klebebändern unter Temperaturbelastung. Dafür wird das zu untersuchende Klebeband auf eine temperierbare Stahlplatte geklebt, mit einem Gewicht (50 g) belastet und die Scherstrecke aufgezeichnet. Messprobenpräparation:
Das zu untersuchende Klebeband (50 $\mu$m Transfertape) wird mit einer der Klebemassenseiten auf eine 50 $\mu$m dicke Aluminiumfolie geklebt. Das so präparierte Klebeband wird auf eine Größe von 10 mm * 50 mm geschnitten.
Die zugeschnittene Klebebandprobe wird mit der anderen Klebemassenseite auf eine polierte, mit Aceton gereinigte Stahl-Prüfplatte (Werkstoff 1.4301, DIN EN 10088-2, Oberfläche 2R, Oberflächen-Rauigkeit $R_a$ = 30 bis 60 nm, Abmessungen 50 mm * 13 mm * 1,5 mm) derart verklebt, dass die Verklebungsfläche der Probe Höhe * Breite = 13 mm * 10 mm beträgt und die Stahl-Prüfplatte am oberen Rand um 2 mm überragt. Anschließend wird mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Stahlplatte derart aufgehängt, dass das länger überstehende Ende des Klebebandes senkrecht nach unten zeigt.

Messung:

Die zu messende Probe wird am unteren Ende mit einem Gewicht von 50 g belastet. Die Stahl-Prüfplatte mit der verklebten Probe wird beginnend bei 25 °C mit einer Rate von 9 K/min auf die Endtemperatur von 200 °C aufgeheizt.
Beobachtet wird der Rutschweg der Probe mittels Wegmessfühler in Abhängigkeit von Temperatur und Zeit. Der maximale Rutschweg ist auf 1000 $\mu$m (1 mm) festgelegt, bei überschreiten wird der Test abgebrochen und die Versagenstemperatur notiert. Prüfklima: Raumtemperatur 23 +/- 3 °C, relative Luftfeuchtigkeit 50 +/- 5%. Das Ergebnis ist der Mittelwert aus zwei Einzelmessungen und wird in °C angegeben.

*Test VII - Durchschlagzähigkeit; z-Ebene (DuPont-Test)*

Aus dem zu untersuchenden Klebeband wurde eine quadratische, rahmenförmige Probe ausgeschnitten (Außenmaße 33 mm x 33 mm; Stegbreite 2,0 mm; Innenmaße (Fensterausschnitt) 29 mm x 29 mm). Diese Probe wurde auf einen Polycarbonat-(PC)-Rahmen (Außenmaße 45 mm x45 mm; Stegbreite 10 mm; Innenmaße (Fensterausschnitt) 25 mm x 25 mm; Dicke 3 mm) geklebt. Auf der anderen Seite des doppelseitigen Klebebands wurde ein PC-Fenster von 35 mm x 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 mm$^2$. Die Verklebung wurde für 5 s mit 248 N gepresst und für 24 Stunden konditioniert bei 23 °C / 50 % relativer Feuchte gelagert.
Unmittelbar nach der Lagerung wurde der Klebeverbund aus PC-Rahmen, Klebeband und PC-Fenster mit den überstehenden Kanten des PC-Rahmens derart in eine Probenhalterung gespannt, dass der Verbund waagerecht ausgerichtet war. Dabei liegt der PC-Rahmen an den überstehenden Kanten auf der Probenhalterungen plan auf, so dass das PC-Fenster unterhalb des PC-Rahmens frei schwebend (durch das Klebebandmuster gehalten) vorlag. Die Probenhalterung wurde anschließend in die vorgesehene Aufnahme des "DuPont Impact Tester" zentrisch eingesetzt. Der 150 g schwere Schlagkopf wurde so eingesetzt, dass die kreisförmige Aufschlaggeometrie mit dem Durchmesser 24 mm auf die von oben frei zugängliche Fläche des PC-Fensters zentrisch und bündig auflag.
Auf den so angeordneten Verbund aus Probenhalterung, Probe und Schlagkopf wurde senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wurde in 5 cm Schritten so lange erhöht, bis die eingebrachte Stoßenergie die Probe durch die Durchschlagbelastung zerstört und das PC-Fenster sich vom PC-Rahmen löste.
Um Versuche mit unterschiedlichen Proben vergleichen zu können, wurde die Energie wie folgt berechnet:

$$E\ [J] = \text{Höhe [m]} * \text{Masse Gewicht [kg]} * 9{,}81\ \text{kg/m*s}^2$$

Es wurden fünf Proben pro Produkt getestet und der Energiemittelwert als Kennzahl für die Durchschlagzähigkeit angegeben.

*Test VIII - Glasübergangstemperatur (DSC)*

Die Glasübergangstemperatur von Polymerblöcken in Blockcopolymeren wird mittels dynamischer Scanning Kalorimetrie (DSC) bestimmt. Dazu werden ca. 5 mg der unbehandelten Blockcopolymerproben in ein Aluminiumtiegelchen (Volumen 25 $\mu$L) eingewogen und mit einem gelochten Deckel verschlossen. Zur Messung wird ein DSC 204 F1 der Firma Netzsch verwendet und unter Stickstoff zur Inertisierung gearbeitet. Die Probe wird zunächst auf -150 °C abgekühlt, mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt. Die Glasübergangstemperatur wird folgendermaßen ausgewertet (siehe dazu Figur 3). An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur.

*Test IX - Vinyl-Gehalt in Polydienblöcken*

Der Anteil an 1,2- und 3,4-verknüpftem konjugiertem Dien im B-Block von Vinylaromatenblockcopolymer (in der Summe Vinyl-Anteil genannt) kann mittels $^1$H-NMR bestimmt werden. Zur spektroskopischen Untersuchung wurde folgendes Gerät verwendet: $^1$H-NMR: Bruker AMX 500 (500.14 MHz). Als Standard diente das Lösungsmittelsignal $\delta$ ($CHCl_3$) =7.24 ppm. Die chemischen Verschiebungen sind immer in ppm angegeben. Die Kopplungskonstanten J sind in Hertz [Hz] angegeben. Die Signalmuster werden wie folgt angegeben: s (Singulett), bs (breites Singulett), d (Dublett), dd (Dublett vom Dublett), t (Triplett), q (Quintett), m (Multiplett).

*Test X - Durchmesser Mikroballons*

Die Bestimmung des mittleren Durchmessers der von den Mikroballons gebildeten Hohlräume in einer Selbstklebemasseschicht erfolgt anhand von Kryobruchkanten des Haftklebestreifens im Rasterelektronenmikroskop (REM) bei 500-facher Vergrößerung. Es wird von den auf REM-Aufnahmen von 5 verschiedenen Kryobruchkanten des Haftklebestreifens zu sehenden Mikroballons der zu untersuchenden Selbstklebemasseschicht jeweils grafisch der Durchmesser ermittelt, wobei das arithmetische Mittel aller in den 5 REM-Aufnahmen ermittelten Durchmesser den mittleren Durchmesser der von den Mikroballons gebildeten Hohlräume der Selbstklebemasseschicht im Sinne der vorliegenden Anmeldung darstellt. Die Durchmesser der auf den Aufnahmen zu sehenden Mikroballons werden graphisch derart ermittelt, dass aus den REM-Aufnahmen für jeden einzelnen Mikroballon der zu untersuchenden Selbstklebemasseschicht dessen maximale Ausdehnung in beliebiger (zweidimensionaler) Richtung entnommen wird und als dessen Durchmesser angesehen wird.

*Test XI - Dichte*

Die Dichte, d.h. absolute Dichte, einer Klebemasse bzw. Klebemasseschicht wird ermittelt durch Quotientenbildung aus Masseauftrag und Dicke der auf einen Träger oder Liner aufgetragenen Klebemassenschicht.

Der Masseauftrag kann durch Bestimmung der Masse eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Masse eines Abschnitts gleicher Dimensionen des verwendeten Trägers bzw. Liners.

Die Dicke einer Klebemasseschicht kann durch Bestimmung der Dicke eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Dicke eines Abschnitts gleicher Dimensionen des verwendeten Trägers bzw. Liners. Die Dicke der Klebemasseschicht lässt sich über handelsübliche Dickenmessgeräte (Taster-Prüfgeräte) mit Genauigkeiten von weniger als 1 $\mu$m Abweichung ermitteln. In der vorliegenden Anmeldung wird das Präzisions-Dickenmessgerät Mod. 2000 F der Firma Wolf Messtechnik GmbH eingesetzt, das einen kreisrunden Taster mit einem Durchmesser von 10 mm (plan) aufweist. Die Messkraft beträgt 4 N. Der Wert wird 1 s nach Belastung abgelesen. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

**Beispiele**

Die erfindungsgemäße Haftklebemasseschicht wird nachfolgend in bevorzugter Ausführung anhand mehrerer Beispiele beschrieben, ohne damit die Erfindung in irgendeiner Weise beschränken zu wollen (E: erfindungsgemäßes Beispiel).

Des Weiteren sind Vergleichsbeispiele aufgeführt, in denen untaugliche Klebemasseschichten dargestellt sind (C: Vergleichsbeispiel).

Die Bestandteile der Haftklebemassen wurden hierbei 40%ig in Siedegrenzenbenzin/Toluol/Aceton gelöst, mit den in Benzin angeschlämmten Mikroballons versetzt und mit einem Streichbalken auf eine PET-Folie ausgerüstet mit einem trennenden Silikon in der gewünschten Schichtdicke ausgestrichen, anschließend bei 100 °C für 15 min das Lösungsmittel abgedampft und so die Masseschicht getrocknet. Dies ist in den aufgeführten Beispielen möglich, da hier Mikroballons genutzt werden, deren Expansionstemperatur oberhalb 100 °C liegt. Der Fachmann wählt bei Nutzung anderer Mikroballons entsprechend geeignete Herstelltemperaturen aus, ohne den Rahmen der vorliegenden Erfindung zu verlassen.

Nach dem Trocknen wurde die Klebeschicht mit einer zweiten Lage PET-Liner frei von jeglichen Lufteinschlüssen eingedeckt und für 30 s bei 170 °C zwischen den beiden Linern in einem Umlufttrockenschrank hängend geschäumt.

Tabelle 2 zeigt die eingesetzten Rohstoffe. Die Tabellen 3a bis 3g zeigen die Rezepturen der Beispiele (E) bzw. Vergleichsbeispiele (C) (%-Angaben der Zusammensetzungen sind Gew.-%, soweit nicht anders angegeben; "BC" bedeutet Blockcopolymer) sowie deren Charakteristik.

*Eingesetzte Rohstoffe:*

Tabelle 1: eingesetzte Rohstoffe.

| Elastomerkomponente (a) | Calprene C4302 (Dynasol Elastomeros) | Polystyrol-Polybutadien-Blockcopolymer | Lineares SBS* PS-Gehalt 31 %* Diblock-Gehalt 24 %*** Peak-M.W. (Triblock) 110 000 g/mol*** Vinyl-Gehalt 12 %**** |
|---|---|---|---|
| | Calprene C7318 (Dynasol Elastomeros) | Polystyrol-Polybutadien-Blockcopolymer | Lineares SBS* PS-Gehalt 32 %* Diblock-Gehalt 76 %*** Peak-M.W. (Triblock) 160 000 g/mol*** Vinyl-Gehalt 11 %**** |
| | Calprene C411 (Dynasol Elastomeros) | Polystyrol-Polybutadien-Blockcopolymer | Radiales SBS* PS-Gehalt 30 %* Diblock-Gehalt < 16 %*** Peak-M.W. (radiales BC) 320 000 g/mol*** Vinyl-Gehalt 12 %**** |
| | Europrene Sol T190 (Versalis) | Polystyrol-Polyisopren-Blockcopolymer | Lineares SIS** PS-Gehalt 16 %** Diblock-Gehalt 25 %** Peak-M.W. (Triblock) 179 000 g/mol Vinyl-Gehalt 10 %**** |
| | Europrene Sol T9113 (Versalis) | Polystyrol-Polyisopren-Blockcopolymer | Lineares SIS** PS-Gehalt 18 %** Diblock-Gehalt 8 %** Peak-M.W. (Triblock) 148 000 g/mol Vinyl-Gehalt 9 %**** |

(fortgesetzt)

| Klebharzkomponente (b) | Regalite R1125 (Eastman Chemical) | Vollhydriertes C9-Kohlenwasserstoffharz | Erweichungspunkt 125 °C DACP = +55 °C |
|---|---|---|---|
| | Dercolyte A115 (DRT) | alpha-Pinen-Harz | Erweichungspunkt 115 °C DACP = +35 °C |
| | Piccolyte A135 (Pinova) | alpha-Pinen-Harz | Erweichungspunkt 135 °C DACP = +30 °C |
| WeichmacherKomponente (c) | Wingtack 10 (Cray Valley) | Aliphatisches C5-Flüssigharz | Erweichungspunkt 10 °C |
| | Piccolyte A25 (Pinova) | Polyterpen-basiertes Flüssigharz | Erweichungspunkt 25 °C |
| | Pionier 2070P | Weißöl | Glasübergangstemperatur -73°C, abgeschätzter Erweichungspunkt -23 °C (Erweichungspunkt = Glasübergangstemperatur + 50 °C) |
| Additive (d) | Irganox 1010 (BASF) | Primäres Alterungsschutzmittel (sterisch gehindertes Phenolderivat) | |
| | Irgafos 168 (BASF) | Sekundäres Alterungsschutzmittel (Phosphorsäureester) | |
| Mikroballons | Expancel 920 DU20 (Nouryon) | | |
| *) Herstellerangaben Dynasol Elastomers ; **) Herstellerangaben Versalis; ***) Abschätzung aus GPC-Messungen; ****) nach Test IX. | | | |

Es wurden geschäumte Transferklebebänder in 100 μm Dicke hergestellt. Durch Ausstanzen bzw. Streifenschneiden wurden Haftklebestreifender gewünschten Abmessungen erhalten.

Tabelle 3a: Rezepturen und deren Charakteristik.

| | C1 | C2 | C3 | C4 |
|---|---|---|---|---|
| Calprene C7318 | 0 % | 48 % | 25 % | 25 % |
| Calprene C4302 | 48 % | 0 % | 25 % | 0 % |
| Calprene C411 | 0 % | 0 % | 0 % | 25 % |
| | | | | |
| Dercolyte A115 | 48 % | 48 % | 48 % | 48 % |
| | | | | |
| Wingtack 10 | 2% | 2% | 2 % | 2 % |
| | | | | |
| Irganox 1010 | 0,5 % | 0,5 % | 0,5 % | 0,5 % |
| Irgafos 168 | 0,5 % | 0,5 % | 0,5 % | 0,5 % |
| | | | | |

(fortgesetzt)

| | C1 | C2 | C3 | C4 |
|---|---|---|---|---|
| Expancel 920 DU20 | 1,0 % | 1,0 % | 1,0 % | 1,0 % |
| | | | | |
| Diblock | 24 % | 76 % | 50 % | <46 % |
| Anteil hochmolekulares BC | 0% | 24 % | 12 % | 54 % |
| Summe b) + c) | 50 % | 50 % | 50 % | 50 % |
| Harmonisches Mittel b) und c) | 109 °C | 109 °C | 109 °C | 109 °C |
| | | | | |
| DuPont PC/PC | 611 mJ | 493 mJ | 567 mJ | 579 mJ |
| Peel | 5,7 N/cm | 9,2 N/cm | 7,1 N/cm | 6,5 N/cm |
| SAFT | 115 °C | 122 °C | 119 °C | 130 °C |
| Dichte | 785 kg/m$^3$ | 773 kg/m$^3$ | 795 kg/m$^3$ | 804 kg/m$^3$ |

Tabelle 3b: weitere Rezepturen und deren Charakteristik.

| | E5 | E6 | E7 | E8 |
|---|---|---|---|---|
| Calprene C4302 | 0 % | 24 % | 10 % | 12 % |
| Calprene C411 | 48 % | 24 % | 35 % | 36 % |
| | | | | |
| Dercolyte A115 | 48 % | 48 % | 49 % | 48 % |
| | | | | |
| Wingtack 10 | 2% | 2% | 4 % | 2 % |
| | | | | |
| Irganox 1010 | 0,5 % | 0,5 % | 0,5 % | 0,5 % |
| Irgafos 168 | 0,5 % | 0,5 % | 0,5 % | 0,5 % |
| | | | | |
| Expancel 920 DU 20 | 1,0 % | 1,0 % | 1,0 % | 1,0 % |
| | | | | |
| Diblock | <16 % | <20 % | <18 % | <18 % |
| Anteil hochmolekulares BC | 84 % | 42 % | 65 % | 57 % |
| Summe b) + c) | 50 % | 50 % | 53 % | 50 % |
| Harmonisches Mittel b) und c) | 109 °C | 109 °C | 105 °C | 109 °C |
| | | | | |
| DuPont PC/PC | 653 mJ | 675 mJ | 734 mJ | 673 mJ |
| Peel steel | 3,8 N/cm | 4,4 N/cm | 4,9 N/cm | 4,0 N/cm |
| SAFT | 137 °C | 126 °C | 129 °C | 131°C |
| Dichte | 813 kg/m$^3$ | 794 kg/m$^3$ | 779 kg/m$^3$ | 813 kg/m$^3$ |

Tabelle 3c: weitere Rezepturen und deren Charakteristik.

|  | E9 | E10 | E11 |
|---|---|---|---|
| Calprene C411 | 0 % | 0 % | 43 % |
| Europrene Sol T190 | 0 % | 50 % | 0 % |
| Europrene Sol T9113 | 50 % | 0 % | 0 % |
|  |  |  |  |
| Dercolyte A115 | 0 % | 0 % | 49 % |
| Regalite R1125 | 45,5 % | 45,5 % | 0 % |
|  |  |  |  |
| Wingtack 10 | 2,5 % | 2,5 % | 6 % |
|  |  |  |  |
| Irganox 1010 | 0,5 % | 0,5 % | 0,5 % |
| Irgafos 168 | 0,5 % | 0,5 % | 0,5 % |
|  |  |  |  |
| Expancel 920 DU20 | 1,0 % | 1,0 % | 1,0 % |
|  |  |  |  |
| Diblock | 8,0 % | 25,0 % | <16,0 % |
| Anteil hochmolekulares BC | 92 % | 75 % | 84 % |
| Summe b) + c) | 48 % | 48 % | 55 % |
| Harmonisches Mittel b) und c) | 117 °C | 117 °C | 100 °C |
|  |  |  |  |
| DuPont PC/PC | 706 mJ | 706 mJ | 725 mJ |
| Peel steel | 10,5 N/cm | 7,8 N/cm | 5,1 N/cm |
| SAFT | 116 °C | 112 °C | 132 °C |
| Dichte | 786 kg/m$^3$ | 738 kg/m$^3$ | 784 kg/m$^3$ |

Tabelle 3d: weitere Rezepturen und deren Charakteristik.

|  | E12 | E13 | C14 | C15 |
|---|---|---|---|---|
| Calprene C7318 | 0 % | 0 % | 12 % | 0% |
| Calprene C4302 | 20 % | 20 % | 0 % | 31 % |
| Calprene C411 | 27 % | 27 % | 37 % | 20 % |
|  |  |  |  |  |
| Dercolyte A115 | 0 % | 0 % | 39 % | 37 % |
| Piccolyte A135 | 37 % | 43 % | 0 % | 0 % |
|  |  |  |  |  |
| Wingtack 10 | 0 % | 0 % | 10 % | 10 % |
| Piccolyte A25 | 14 % | 8 % | 0 % | 0 % |
|  |  |  |  |  |
| Irganox 1010 | 0,5 % | 0,5 % | 0,5 % | 0,5 % |
| Irgafos 168 | 0,5 % | 0,5 % | 0,5 % | 0,5 % |

(fortgesetzt)

| | E12 | E13 | C14 | C15 |
|---|---|---|---|---|
| | | | | |
| Expancel 920 DU20 | 1,0 % | 1,0 % | 1,0 % | 1,0 % |
| | | | | |
| Diblock | <19,4 % | <19,4 % | <30,7 % | <20,9 % |
| Anteil hochmolekulares BC | 48,2 % | 48,2 % | 69,3 % | 32,9 % |
| Summe b) + c) | 51 % | 51 % | 49 % | 47 % |
| Harmonisches Mittel b) und c) | 97 °C | 113 °C | 88 °C | 87 °C |
| | | | | |
| DuPont PC/PC | 839 mJ | 868 mJ | 544 mJ | 500 mJ |
| Peel | 6,8 N/cm | 9,7 N/cm | 3,8 N/cm | 2,6 N/cm |
| SAFT | 128 °C | 131 °C | 132 °C | 118 °C |
| Dichte | 803 kg/m$^3$ | 779 kg/m$^3$ | 753 kg/m$^3$ | 753 kg/m$^3$ |

Tabelle 3e: weitere Rezepturen und deren Charakteristik.

| | E16 | E10 | E17 | C18 | C19 |
|---|---|---|---|---|---|
| Calprene C4302 | 30 % | 0 % | 0 % | 0% | 0 % |
| Calprene C411 | 11 % | 0 % | 0 % | 0 % | 0 % |
| Europrene Sol T190 | 0% | 50 % | 49 % | 48,5 % | 47,5 % |
| | | | | | |
| Dercolyte A115 | 53 % | 0 % | 0 % | 0 % | 0 % |
| Piccolyte A135 | 0 % | 0 % | 0 % | 0 % | 0 % |
| Regalite R1125 | 0 % | 45,5 % | 45,5 % | 45 % | 44 % |
| | | | | | |
| Wingtack 10 | 4 % | 2,5 % | 2,5 % | 2,5 % | 2,5 % |
| Irganox 1010 | 0,5 % | 0,5 % | 0,5 % | 0,5 % | 0,5 % |
| Irgafos 168 | 0,5 % | 0,5 % | 0,5 % | 0,5 % | 0,5 % |
| | | | | | |
| Mikroballons | 1 % | 1,0 % | 2 % | 3 % | 5 % |
| | | | | | |
| Diblock | <21,9 % | 25,0 % | 25,0 % | 25,0 % | 25,0 % |
| Anteil hochmolekulares BC | 22,5 % | 75 % | 75 % | 75 % | 75 % |
| Summe b) + c) | 57,0 % | 48 % | 48,0 % | 47,5 % | 46,5 % |
| Harmonisches Mittel b) und c) | 101 °C | 117 °C | 117 °C | 117 °C | 117 °C |
| | | | | | |
| DuPont PC/PC | 706 mJ | 706 mJ | 721 mJ | 515 mJ | 368 mJ |
| Peel | 11,1 N/cm | 7,8 N/cm | 8,3 N/cm | 7,7 N/cm | 6,9 N/cm |
| SAFT | 114 °C | 112 °C | 118 °C | 125 °C | 131 °C |

(fortgesetzt)

| | E16 | E10 | E17 | C18 | C19 |
|---|---|---|---|---|---|
| Dichte | 790 kg/m$^3$ | 771 kg/m$^3$ | 651 kg/m$^3$ | 550 kg/m$^3$ | 447 kg/m$^3$ |

Tabelle 3f: weitere Rezepturen und deren Charakteristik.

| | C20 | C21 | E22 | C24 | E25 |
|---|---|---|---|---|---|
| Calprene C4302 | 31 % | 31 % | 29 % | 27 % | 27 % |
| Calprene C411 | 20 % | 20 % | 19 % | 17 % | 17 % |
| | | | | | |
| Dercolyte A115 | 47 % | 0 % | 0 % | 0% | 0 % |
| Piccolyte A135 | 0 % | 37 % | 38 % | 39 % | 39 % |
| Wingtack 10 | 0 % | 10 % | 12 % | 15 % | 0 % |
| Piccolyte A25 | 0 % | 0 % | 0 % | 0 % | 15 % |
| | | | | | |
| Irganox 1010 | 0,5 % | 0,5 % | 0,5 % | 0,5 % | 0,5 % |
| Irgafos 168 | 0,5 % | 0,5 % | 0,5 % | 0,5 % | 0,5 % |
| | | | | | |
| Mikroballons | 1 % | 1 % | 1 % | 1 % | 1 % |
| | | | | | |
| Diblock | <20,9 % | <20,9 % | <20,8 % | <20,9 % | <20,9 % |
| Anteil hochmolekulares BC | 32,9 % | 32,9 % | 33,3 % | 32,4 % | 32,4 % |
| Summe b) + c) | 47,0 % | 47,0 % | 50,0 % | 54,0 % | 54,0 % |
| Harmonisches Mittel b) und c) | 115 °C | 100 °C | 96 °C | 90 °C | 97 °C |
| | | | | | |
| DuPont PC/PC | 519 mJ | 706 mJ | 736 mJ | 780 mJ | 780 mJ |
| Peel | 3,5 N/cm | 5,2 N/cm | 6,7 N/cm | 7,9 N/cm | 9,2 N/cm |
| SAFT | 126 °C | 124 °C | 116 °C | 114 °C | 118 °C |
| Dichte | 791 kg/m$^3$ | 787 kg/m$^3$ | 817 kg/m$^3$ | 799 kg/m$^3$ | 814 kg/m$^3$ |

Tabelle 3g: weitere Rezepturen und deren Charakteristik.

| | E26 | E27 | E28 | C29 |
|---|---|---|---|---|
| Calprene C7318 | 12 % | 0 % | 0 % | 0 % |
| Calprene C4302 | 0 % | 0 % | 0 % | 10 % |
| Calprene C411 | 38 % | 0 % | 0 % | 33 % |
| Europrene Sol T190 | 0 % | 50,0 % | 50,0 % | 0 % |
| | | | | |
| Dercolyte A115 | 0 % | 0 % | 0 % | 0 % |
| Piccolyte A135 | 38,0 % | 0 % | 0 % | 53,0 % |
| Regalite R1125 | 0% | 45,5 % | 43,0 % | 0 % |

(fortgesetzt)

| | E26 | E27 | E28 | C29 |
|---|---|---|---|---|
| | | | | |
| Wingtack 10 | 10,0 % | 0 % | 0 % | 2,0 % |
| Pionier 2070P | 0 % | 2,5 % | 5,0 % | 0 % |
| | | | | |
| Irganox 1010 | 0,5 % | 0,5 % | 0,5 % | 0,5 % |
| Irgafos 168 | 0,5 % | 0,5 % | 0,5 % | 0,5 % |
| | | | | |
| Mikroballons | 1 % | 1 % | 1 % | 1 % |
| | | | | |
| Diblock | <28,5 % | 25 % | 25 % | <17,9 % |
| Anteil hochmolekulares BC | 75 % | 75 % | 75 % | 64,4 % |
| Summe b) + c) | 48 % | 48 % | 48 % | 55 % |
| Harmonisches Mittel b) und c) | 101 °C | 113 °C | 102 °C | 129 °C |
| | | | | |
| DuPont PC/PC | 736 mJ | 824 mJ | 853 mJ | 162 mJ |
| Peel | 6,0 N/cm | 9,1 N/cm | 7,9 N/cm | 14,2 N/cm |
| SAFT | 140 °C | 113 °C | 112 °C | 129 °C |
| Dichte | 814 kg/m$^3$ | 738 kg/m$^3$ | 774 kg/m$^2$ | 761 kg/m$^3$ |

Es wurden geschäumte Transferklebebänder in 100 μm Dicke untersucht.

Die Vergleichsbeispiele C1 bis C4 aus Tabelle 3a zeigen, dass bei zu geringer Peakmolmasse bzw. zu hohem Diblockanteil des Polyvinylaromat-Polydien-Blockcopolymers eine verbesserungswürde Schockresistenz zu verzeichnen ist.

Durch Erhöhung der Peakmolmasse bzw. Verringerung des Diblockanteils lässt sich, wie die Beispiele E5 bis E11 aus Tabelle 3b bzw. 3c zeigen, die Schockresistenz verbessern, so dass sie dem bevorzugten Anforderungsprofil aus Tabelle 1 entsprechen. Auch die Verklebungsfestigkeit und Wärmescherfestigkeit entsprechen jeweils besagtem Anforderungsprofil.

Die Beispiele E12 und E13 und Vergleichsbeispiele C14 und C15 aus Tabelle 3d zeigen zudem, dass das harmonische Mittel der Erweichungstemperatur der Klebharzkomponente und der Weichmacherkomponente von mindestens 95 °C wesentlich ist, um die der Erfindung zugrunde liegende Aufgabe zu lösen, insbesondere eine zufriedenstellende Schockresistenz bzw. Verklebungsfestigkeit zu erzielen.

Die Beispiele E16 und E17 und Vergleichsbeispiele C18 und C19 aus Tabelle 3e zeigen zudem, dass die Auswahl eines geeigneten Mikroballonanteils ebenfalls wesentlich ist, um die der Erfindung zugrunde liegende Aufgabe zu lösen, insbesondere eine zufriedenstellende Schockresistenz zu erzielen.

Gleiches gilt, wie das Vergleichsbeispiel C20 aus Tabelle 3f zeigt, für das Vorliegen von Weichmacher, wie insbesondere Weichharz.

## Patentansprüche

1.  Geschäumte Haftklebemasseschicht auf Basis von Polyvinylaromat-Polydien-Blockcopolymeren, insbesondere für doppelseitige Selbstklebebänder, enthaltend

    a) 39,8 Gew.-% bis 51,8 Gew.-% einer Elastomerkomponente,
    b) 35,0 Gew.-% bis 58,0 Gew.-% einer Klebharzkomponente,
    c) 2,0 Gew.-% bis 15,0 Gew.-% einer Weichmacherkomponente,

d) 0,0 Gew.-% bis 18,0 Gew.-% weitere Additive und

e) Mikroballons, vorzugsweise in einer Menge von 0,2 Gew.-% bis 2,5 Gew.-%, wobei die Mikroballons zumindest teilweise expandiert sind,

wobei die Elastomerkomponente (a) zu mindestens 90 Gew.-% aus ein oder mehreren Polyvinylaromat-Polydien-Blockcopolymeren besteht,

wobei der mittlere Diblock-Anteil, bezogen auf die gesamten Polyvinylaromat-Polydien-Blockcopolymere, höchstens 35 Gew.-% beträgt,

wobei die Polydienblöcke der Polyvinylaromat-Polydien-Blockcopolymere einen mittleren Vinyl-Anteil (Test IX) von weniger als 20 Gew.-%, bezogen auf die gesamten Polydienblöcke, aufweisen,

und wobei, bezogen auf die gesamten Polyvinylaromaten-Polydien-Blockcopolymere, zumindest ein Polyvinylaromat-Polydien-Blockcopolymer einer Peakmolmasse (Test Ia) von mindestens 125 000 g/mol zu mindestens 15 Gew.-%, bevorzugt mindestens 25 Gew.-%, und bis zu 100 Gew.-%, bevorzugt höchstens 90 Gew.-%, enthalten ist,

wobei die Klebharzkomponente (b) zu mindestens 75 Gew.-% bezogen auf die Klebharzkomponente zumindest ein Klebharz mit einem DACP (Test II) von mindestens -20 °C und einer Erweichungstemperatur von mindestens 85 °C und höchstens 140 °C (Test IIIa) enthält,

wobei die Weichmacherkomponente (c) zumindest ein Weichharz und/oder Mineralöl jeweils mit einer Erweichungstemperatur (Ring & Ball, Test VI) von < 30 °C enthält,

wobei die Summe aus Klebharzkomponente (b) und Weichmacherkomponente (c) mindestens 48 Gew.-% und höchstens 60 Gew.-% beträgt und das harmonische Mittel der Erweichungstemperatur (Test IIIb) von Klebharzkomponente und Weichmacherkomponente bei mindestens 95 °C und höchstens 125 °C liegt und

wobei die Dichte (Test XI) der geschäumten Haftklebemasseschicht bei mindestens 600 kg/m$^3$ und höchstens 950 kg/m$^3$ liegt.

2. Haftklebemasseschicht nach Anspruch 1,
**dadurch gekennzeichnet, dass**
der mittlere Diblock-Anteil, bezogen auf die gesamten Polyvinylaromat-Polydien-Blockcopolymere, höchstens 25 Gew.-% beträgt, bevorzugt höchstens 15 Gew.-%.

3. Haftklebemasseschicht nach Anspruch 1 oder 2,
**dadurch gekennzeichnet, dass**
die Polydienblöcke der Polyvinylaromat-Polydien-Blockcopolymere einen mittleren Vinyl-Anteil (Test IX) von weniger als 17 Gew.-%, bevorzugt weniger als 13 Gew.-%, bezogen auf die gesamten Polydienblöcke aufweisen.

4. Haftklebemasseschicht nach einem der Ansprüche 1 bis 3,
**dadurch gekennzeichnet, dass**
bezogen auf die gesamten Polyvinylaromaten-Polydien-Blockcopolymere, zumindest ein Polyvinylaromat-Polydien-Blockcopolymer einer Peakmolmasse (Test Ia) von mindestens 200 000 g/mol, sehr bevorzugt mindestens 250 000 g/mol, zu mindestens 15 Gew.-%, bevorzugt mindestens 25 Gew.-%, und bis zu 100 Gew.-%, bevorzugt höchstens 90 Gew.-%, enthalten ist.

5. Haftklebemasseschicht nach einem der Ansprüche 1 bis 4,
**dadurch gekennzeichnet, dass**
die Haftklebemasseschicht 47,0 Gew.-% bis 55,0 Gew.-% einer Klebharzkomponente enthält.

6. Haftklebemasseschicht nach einem der Ansprüche 1 bis 5,
**dadurch gekennzeichnet, dass**
die Klebharzkomponente (b) zu mindestens 75 Gew.-% bezogen auf die Klebharzkomponente zumindest ein Klebharz mit einem DACP (Test II) von mindestens 0 °C und einer Erweichungstemperatur von mindestens 100 °C (Test IIIa) enthält.

7. Haftklebemasseschicht nach einem der Ansprüche 1 bis 6,
**dadurch gekennzeichnet, dass**
die Haftklebemasseschicht 3,0 Gew.-% bis 10,0 Gew.-% einer Weichmacherkomponente enthält.

8. Haftklebemasseschicht nach einem der Ansprüche 1 bis 7,
**dadurch gekennzeichnet, dass**
die Weichmacherkomponente (c) ein Weichharz oder Weichharzgemisch mit einer Erweichungstemperatur (Ring

& Ball, Test IIIa) von < 30 °C ist, vorzugsweise mit einer Schmelzviskosität bei 25 °C und 1 Hz (Test IV) von zumindest 20 Pa*s, bevorzugt von zumindest 50 Pa*s.

9. Haftklebemasseschicht nach einem der Ansprüche 1 bis 8,
   **dadurch gekennzeichnet, dass**
   das harmonische Mittel der Erweichungstemperatur (Test IIIb) von Klebharzkomponente (b) und Weichmacherkomponente (c) höchstens 125 °C beträgt.

10. Haftklebemasseschicht nach einem der Ansprüche 1 bis 9,
    **dadurch gekennzeichnet, dass**
    der Anteil an Mikroballons 0,5 Gew.-% bis 2,0 Gew.-%, bevorzugt 0,7 Gew.-% bis 1,7 Gew.-% beträgt.

11. Haftklebemasseschicht nach einem der Ansprüche 1 bis 10,
    **dadurch gekennzeichnet, dass**
    die Dichte (Test XI) der Haftklebemasseschicht mindestens 650 kg/m$^3$ und höchstens 900 kg/m$^3$ und bevorzugt mindestens 700 kg/m$^3$ und höchstens 850 kg/m$^3$ beträgt.

12. Klebeband, das zumindest eine Haftklebemasseschicht gemäß einem der Ansprüche 1 bis 11 enthält, wobei das Klebeband vorzugsweise ein doppelseitiges Klebeband und insbesondere ein Transfertape ist.

13. Klebeband nach Anspruch 12, das sich durch dehnendes Verstrecken im Wesentlichen in der Verklebungsebene rückstands- und zerstörungsfrei wieder ablösen lässt.

14. Verbund, bei dem zwei Substrate mittels eines doppelseitigen Klebebands gemäß Anspruch 12 oder 13 verklebt sind, wobei die beiden Substrate vorzugsweise Bauteile eines Mobilgeräts sind.

15. Verwendung eines Klebebands nach Anspruch 12 oder 13 zur Verklebung von Bauteilen von Mobilgeräten, wie zum Beispiel Akkus.

**Claims**

1. Foamed pressure-sensitive adhesive layer based on polyvinylaromatic-polydiene block copolymers, especially for double-sided self-adhesive tapes, comprising

   a) 39.8 wt% to 51.8 wt% of an elastomer component,
   b) 35.0 wt% to 58.0 wt% of a tackifier resin component,
   c) 2.0 wt% to 15.0 wt% of a plasticizer component,
   d) 0.0 wt% to 18.0 wt% of further additives and
   e) microballoons, preferably in an amount of 0.2 wt% to 2.5 wt%, where the microballoons are in an at least partly expanded state,
   where the elastomer component (a) consists at least 90 wt% of one or more polyvinylaromatic-polydiene block copolymers,
   where the mean diblock fraction, based on the total polyvinylaromatic-polydiene block copolymers, is at most 35 wt%,
   where the polydiene blocks of the polyvinylaromatic-polydiene block copolymers have a mean vinyl fraction (test IX) of less than 20 wt%, based on the total polydiene blocks,
   and where, based on the total polyvinylaromatic-polydiene block copolymers, at least one polyvinylaromatic-polydiene block copolymer with a peak molar mass (test Ia) of at least 125 000 g/mol is present at at least 15 wt%, preferably at least 25 wt%, and up to 100 wt%, preferably at most 90 wt%,
   where the tackifier resin component (b) comprises at least 75 wt%, based on the tackifier resin component, of at least one tackifier resin having a DACP (test II) of at least -20°C and a softening temperature of at least 85°C and at most 140°C (test IIIa),
   where the plasticizer component (c) comprises at least one plasticizer resin and/or mineral oil each having a softening temperature (ring & ball, test VI) of < 30°C,
   where the sum of tackifier resin component (b) and plasticizer component (c) is at least 48 wt% and at most 60 wt% and the harmonic mean of the softening temperature (test IIIb) of tackifier resin component and plasticizer component is at least 95°C and at most 125°C, and

where the density (test XI) of the foamed pressure-sensitive adhesive layer is at least 600 kg/m$^3$ and at most 950 kg/m$^3$.

2. Pressure-sensitive adhesive layer according to Claim 1,
   **characterized in that**
   the mean diblock fraction, based on the total polyvinylaromatic-polydiene block copolymers, is at most 25 wt%, preferably at most 15 wt%.

3. Pressure-sensitive adhesive layer according to Claim 1 or 2,
   **characterized in that**
   the polydiene blocks of the polyvinylaromatic-polydiene block copolymers have a mean vinyl fraction (test IX) of less than 17 wt%, preferably less than 13 wt%, based on the total polydiene blocks.

4. Pressure-sensitive adhesive layer according to any of Claims 1 to 3,
   **characterized in that**
   based on the total polyvinylaromatic-polydiene block copolymers, at least one polyvinylaromatic-polydiene block copolymer with a peak molar mass (test Ia) of at least 200 000 g/mol, very preferably at least 250 000 g/mol, is present at at least 15 wt%, preferably at least 25 wt%, and up to 100 wt%, preferably at most 90 wt%.

5. Pressure-sensitive adhesive layer according to any of Claims 1 to 4,
   **characterized in that**
   the pressure-sensitive adhesive layer comprises 47.0 wt% to 55.0 wt% of a tackifier resin component.

6. Pressure-sensitive adhesive layer according to any of Claims 1 to 5,
   **characterized in that**
   the tackifier resin component (b) comprises at least 75 wt%, based on the tackifier resin component, of at least one tackifier resin having a DACP (test II) of at least 0°C and a softening temperature of at least 100°C (test IIIa).

7. Pressure-sensitive adhesive layer according to any of Claims 1 to 6,
   **characterized in that**
   the pressure-sensitive adhesive layer comprises 3.0 wt% to 10.0 wt% of a plasticizer component.

8. Pressure-sensitive adhesive layer according to any of Claims 1 to 7,
   **characterized in that**
   the plasticizer component (c) is a plasticizer resin or plasticizer resin mixture having a softening temperature (ring & ball, test IIIa) of < 30°C, preferably having a melt viscosity at 25°C and 1 Hz (test IV) of at least 20 Pa*s, preferably of at least 50 Pa*s.

9. Pressure-sensitive adhesive layer according to any of Claims 1 to 8,
   **characterized in that**
   the harmonic mean of the softening temperature (test IIIb) of tackifier resin component (b) and plasticizer component (c) is at most 125°C.

10. Pressure-sensitive adhesive layer according to any of Claims 1 to 9,
    **characterized in that**
    the fraction of microballoons is 0.5 wt% to 2.0 wt%, preferably 0.7 wt% to 1.7 wt%.

11. Pressure-sensitive adhesive layer according to any of Claims 1 to 10,
    **characterized in that**
    the density (test XI) of the pressure-sensitive adhesive layer is at least 650 kg/m$^3$ and at most 900 kg/m$^3$ and preferably at least 700 kg/m$^3$ and at most 850 kg/m$^3$.

12. Adhesive tape which comprises at least one pressure-sensitive adhesive layer according to any of Claims 1 to 11, where the adhesive tape is preferably a double-sided adhesive tape and more particularly a transfer tape.

13. Adhesive tape according to Claim 12, which is redetachable without residue or destruction by extensive stretching substantially in the bond plane.

**14.** Assembly wherein two substrates are bonded by means of a double-sided adhesive tape according to Claim 12 or 13, where the two substrates are preferably components of a mobile device.

**15.** Use of an adhesive tape according to Claim 12 or 13 for bonding components of mobile devices, such as rechargeable batteries.

**Revendications**

**1.** Couche de masse auto-adhésive moussée à base de copolymères à blocs de poly(vinylaromatique)-polydiène, en particulier pour des rubans autoadhésifs double face, contenant

a) 39,8 % en poids à 51,8 % en poids d'un composant de type élastomère,
b) 35,0 % en poids à 58,0 % en poids d'un composant de type résine auto-adhésive,
c) 2,0 % en poids à 15,0 % en poids d'un composant de type plastifiant,
d) 0,0 % en poids à 18,0 % en poids d'autres additifs et
e) des microballons, de préférence en une quantité de 0,2 % en poids à 2,5 % en poids, les microballons étant au moins partiellement expansés,
le composant de type élastomère (a) étant constitué d'au moins 90 % en poids d'un ou plusieurs copolymères à blocs de poly(vinylaromatique)-polydiène,
la proportion moyenne de dibloc par rapport à tous les copolymères à blocs de poly(vinylaromatique)-polydiène, étant d'au plus 35 % en poids,
les blocs de polydiène des copolymères à blocs de poly(vinylaromatique)-polydiène présentant une proportion moyenne en vinyle (test IX) de moins de 20 % en poids, par rapport à tous les blocs de polydiène,
et, par rapport à tous les copolymères à blocs de poly(vinylaromatique)-polydiène, au moins un copolymère à blocs de poly(vinylaromatique)-polydiène d'une masse molaire maximale (test Ia) d'au moins 125 000 g/mole étant contenu à hauteur d'au moins 15 % en poids, préférablement d'au moins 25 % en poids, et jusqu'à 100 % en poids, préférablement d'au plus 90 % en poids,
le composant de type résine auto-adhésive (b) contenant, à hauteur d'au moins 75 % en poids par rapport au composant de type résine auto-adhésive, une résine auto-adhésive dotée d'un DACP (test II) d'au moins -20 °C et d'une température de ramollissement d'au moins 85 °C et d'au plus 140 °C (test IIIa),
le composant de type plastifiant (c) contenant au moins une résine molle et/ou une huile minérale à chaque fois dotée d'une température de ramollissement (anneau et bille, test VI) de < 30 °C,
la somme du composant de type résine auto-adhésive (b) et du composant de type plastifiant (c) étant d'au moins 48 % en poids et d'au plus 60 % en poids et la moyenne harmonique de la température de ramollissement (test IIIb) du composant de type résine auto-adhésive et du composant de type plastifiant se situant à au moins 95 °C et au plus 125 °C et
la densité (test XI) de la couche de masse auto-adhésive moussée se situant à au moins 600 kg/m$^3$ et au plus 950 kg/m$^3$.

**2.** Couche de masse auto-adhésive selon la revendication 1,
**caractérisée en ce que**
la proportion moyenne de diblocs, par rapport à tous les copolymères à blocs de poly(vinylaromatique-polydiène, est d'au plus 25 % en poids, préférablement d'au plus 15 % en poids.

**3.** Couche de masse auto-adhésive selon la revendication 1 ou 2,
**caractérisée en ce que** les blocs de polydiène des copolymères à blocs de polyvinylaromatique-polydiène présente une teneur moyenne en vinyle (test IX) de moins de 17 % en poids, préférablement de moins de 13 % en poids, par rapport à tous les blocs de polydiène.

**4.** Couche de masse auto-adhésive selon l'une quelconque des revendications 1 à 3,
**caractérisée en ce que**,
par rapport à tous les copolymères à blocs de polyvinylaromatique-polydiène, au moins un copolymère à blocs de polyvinylaromatique-polydiène d'une masse molaire maximale (test Ia) d'au moins 200 000 g/mole, très préférablement d'au moins 250 000 g/mole, est contenu à hauteur d'au moins 15 % en poids, préférablement d'au moins 25 % en poids, et jusqu'à 100 % en poids, préférablement d'au plus 90 % en poids.

**5.** Couche de masse auto-adhésive selon l'une quelconque des revendications 1 à 4,

**caractérisée en ce que**
la couche de masse auto-adhésive contient 47,0 % en poids à 55,0 % en poids d'un composant de type résine auto-adhésive.

6. Couche de masse auto-adhésive selon l'une quelconque des revendications 1 à 5,
**caractérisée en ce que**
le composant de type résine auto-adhésive (b) contient au moins 75 % en poids, par rapport au composant de type résine auto-adhésive, d'au moins une résine auto-adhésive dotée d'un DACP (test II) d'au moins 0 °C et d'une température de ramollissement d'au moins 100 °C (test IIIa).

7. Couche de masse auto-adhésive selon l'une quelconque des revendications 1 à 6,
**caractérisée en ce que**
la couche de masse auto-adhésive contient 3,0 % en poids à 10,0 % en poids d'un composant de type plastifiant.

8. Couche de masse auto-adhésive selon l'une quelconque des revendications 1 à 7,
**caractérisée en ce que**
le composant de type plastifiant (c) est une résine molle ou un mélange de résines molles doté(e) d'une température de ramollissement (anneau et bille, test IIIa) de < 30 °C, de préférence doté(e) d'une viscosité de masse fondue à 25 °C et 1 Hz (test IV) dans moins 20 Pa*s, préférablement d'au moins 50 Pa*s.

9. Couche de masse auto-adhésive selon l'une quelconque des revendications 1 à 8,
**caractérisée en ce que** la moyenne harmonique de la température de ramollissement (test IIIb) du composant de type résine auto-adhésive (b) et du composant de type plastifiant (c) est d'au plus 125 °C.

10. Couche de masse auto-adhésive selon l'une quelconque des revendications 1 à 9,
**caractérisée en ce que** la proportion de microballons est de 0,5 % en poids à 2,0 % en poids, préférablement de 0,7 % en poids à 1,7 % en poids.

11. Couche de masse auto-adhésive selon l'une quelconque des revendications 1 à 10,
**caractérisée en ce que**
la densité (test XI) de la couche de masse auto-adhésive est d'au moins 650 kg/m$^3$ et d'au plus 950 kg/m$^3$ et préférablement d'au moins 700 kg/m$^3$ et d'au plus 850 kg/m$^3$.

12. Ruban adhésif, qui contient au moins une couche de masse auto-adhésive selon l'une quelconque des revendications 1 à 11, le ruban adhésif étant de préférence un ruban adhésif double face et en particulier un ruban de transfert.

13. Ruban adhésif selon la revendication 12, qui se laisse décoller sans résidu et sans destruction par étirage d'extension essentiellement dans le plan de collage.

14. Composite, dans lequel deux substrats sont collés au moyen d'un ruban adhésif double face selon la revendication 12 ou 13, les deux substrats étant de préférence des composants d'un appareil mobile.

15. Utilisation d'un ruban adhésif selon la revendication 12 ou 13 pour le collage de composants d'appareils mobiles, comme par exemple des batteries.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016202018
- EP 3075775 A1
- DE 102008056980
- DE 102008004388 A1
- DE 102008038471 A1
- DE 102008056980 A1
- EP 3330335 A
- DE 3331016 C2

- WO 2011124782 A1
- DE 102012223670 A1
- WO 2009114683 A1
- WO 2010077541 A1
- WO 2010078396 A1
- EP 0894841 B1
- EP 1308492 B1

**In der Beschreibung aufgeführte Nicht-Patentliteratur**

- **F. C. JAGISCH ; J. M. TANCREDE.** Handbook of Pressure Sensitive Adhesive Technology. Satas & Associates, 1999
- **C. DONKER.** *Proceedings of the Pressure Sensitive Tape Council,* 2001, 149-164

- Polymer Handbook. Polymer Handbook. Wiley, 1999
- *CHEMICAL ABSTRACTS,* 1330-20-7
- *CHEMICAL ABSTRACTS,* 123-42-2